# EUROPEAN PATENT APPLICATION

(11) **EP 2 127 729 A1**
(43) Date of publication of application: **02.12.2009**
(21) Application number: 09158900.2
(22) Date of filing: 28.04.2009
(51) Int. Cl.: B01D 53/86, B01J 23/89, B01J 23/83

(54) **Exhaust gas purification catalyst**

(30) Priority: 30.05.2008 JP 2008143494; 30.05.2008 JP 2008143511; 30.05.2008 JP 2008143525; 30.05.2008 JP 2008143530; 30.05.2008 JP 2008143533
(71) Applicant: Mazda Motor Corporation, Aki-gun Hiroshima 730-8670 (JP)
(72) Inventor: Akamine, Masaaki, Hiroshima 730-8670 (JP); Shigetsu, Masahiko, Hiroshima 730-8670 (JP); Sumida, Hirosuke, Hiroshima 730-8670 (JP); Fukushima, Tatsuto, Hiroshima 730-8670 (JP); Miyoshi, Seiji, Hiroshima 730-8670 (JP); Yamada, Hiroshi, Hiroshima 730-8670 (JP); Iwakuni, Hideharu, Hiroshima 730-8670 (JP); Harada, Koichiro, Hiroshima 730-8670 (JP)
(74) Representative: Laufhütte, Dieter

(57) **Abstract**

An exhaust gas purification catalyst includes a catalyst layer (2) formed on a support (1). The catalyst layer (2) contains Ce-containing oxide particles (3) having an oxygen storage/release capacity and a catalytic metal (5). The catalyst layer (2) further contains a large number of iron oxide particles (4) of 300 nm diameter or less that are dispersed therein and are in contact with the Ce-containing oxide particles (3). When observed by electron microscopy, the proportion of the area of iron oxide particles (4) of 300 nm diameter or less to the total area of all of iron oxide particles in the catalyst layer (2) is 30% or more.

## Description

### BACKGROUND

This invention relates to exhaust gas purification catalysts. Generally, the exhaust gas passage of a vehicle engine is provided with an exhaust gas purification catalyst containing a catalytic metal, such as platinum (Pt), palladium (Pd) or rhodium (Rh). The catalyst is required to early become active to provide conversion of exhaust gas still at low exhaust gas temperatures, for example, at engine start. In addition, the catalyst is required also so as not to significantly decrease the exhaust gas conversion efficiency even after the exhaust gas temperature is kept high such as owing to vehicle running at high speed. To meet these requirements, the catalyst uses a relatively large amount of catalytic metal. For example, most of three-way catalysts use 1 to 2 g of catalytic metal per liter (L) of a catalyst support.

Meanwhile, the exhaust gas purification catalyst aims at reducing the environmental load. Therefore, whether the catalyst is deteriorated must be detected and, if necessary, it must be replaced. For the detection of whether the catalyst is deteriorated, an on-board diagnosis (OBD) system is employed in which an oxygen sensor is disposed in the exhaust passage downstream of the catalyst and the degree of deterioration of the catalyst is determined depending on whether the concentration of oxygen in exhaust gas having passed through the catalyst is within a predetermined range. More specifically, this system diagnoses whether the catalytic action of the catalytic metal is maintained, based on whether an oxygen storage component in the catalyst normally stores and releases oxygen in exhaust gas.

The oxygen storage component is known to increase the oxygen storage/release capacity if a catalytic metal is carried on its surface. Conversely, as the amount of catalytic metal used for the catalyst decreases, the oxygen storage/release capacity of the oxygen storage component becomes lower. Therefore, even if the amount of catalytic metal used for the catalyst can be reduced without degrading the exhaust gas purification performance of the catalyst, the oxygen storage/release capacity of the oxygen storage component will be low. As a result, despite that the total travelling distance of the vehicle is not so long (i.e., the exhaust gas purification performance does not degrade so much), the diagnosis system may determine, from the output value of the oxygen sensor, that the catalyst decreases and degrades in oxygen storage/release capacity, i.e., that it is time for the catalyst to be replaced.

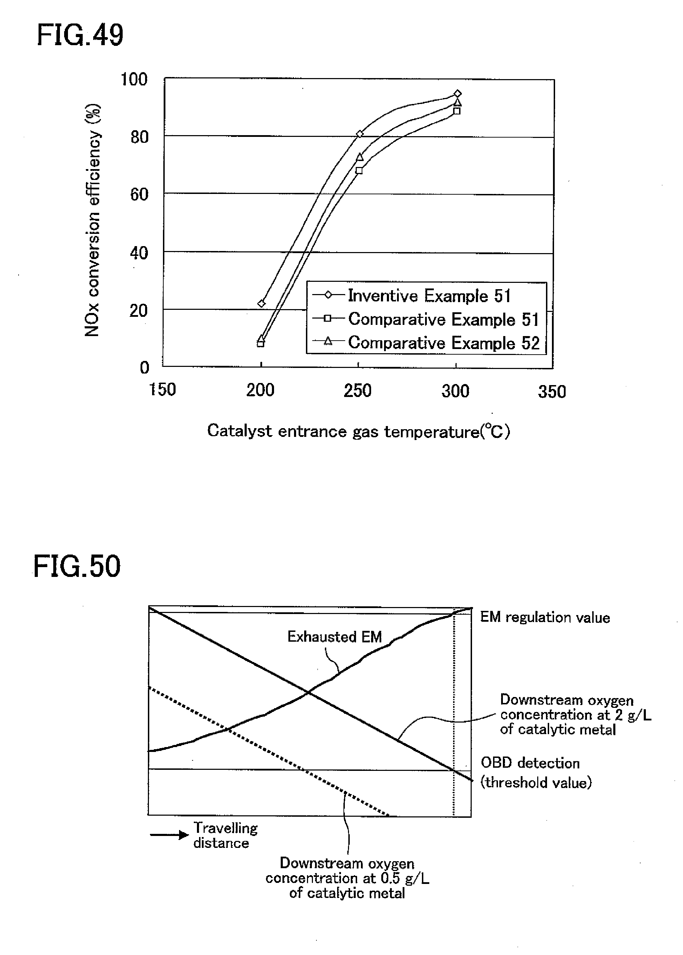

FIG. 50 schematically shows the above. Specifically, if the amount of catalytic metal is, for example, 2 g/L, the oxygen concentration detected by the oxygen sensor downstream of the catalyst reaches the threshold value of the OBD system at or near the travelling distance at which the amount of exhausted emissions (EM, i.e., air pollutants) reaches the EM regulation value. However, even if the amount of catalytic metal can be reduced, for example, to 0.5 g/L without degrading the exhaust gas purification performance, the oxygen storage/release capacity of the oxygen storage component is low and, therefore, the oxygen concentration downstream of the catalyst drops below the threshold value of the OBD system before the amount of exhausted EM reaches the EM regulation value. As a result, the OBD system will determine that the catalyst has been deteriorated.

An example of the three-way catalysts is described in Published Japanese Patent Application No. 2003-220336. The three-way catalyst includes: a support containing an oxide of cerium; and catalytic metals containing a transition metal and a precious metal and carried on the support, wherein the atom ratio of transition metal to cerium atom and the atom ratio thereof to the precious metal are within their respective predetermined ranges. The document discloses that at least one of cobalt (Co), nickel (Ni) and iron (Fe) is preferably used as the transition metal. However, the document discloses only examples using Co or Ni as a transition metal but discloses no example using Fe as a transition metal.

In the above examples disclosed in Published Japanese Patent Application No. 2003-220336, powder of a ceria-zirconia solid solution is impregnated with a solution of nickel nitrate (or cobalt nitrate), evaporated to dryness, dried and calcined to produce a powder and the powder thus obtained is impregnated with a solution of Pt, evaporated to dryness, dried and calcined to produce a catalyst powder. Then, the catalyst powder is mixed with Rh/ZrO₂ powder, Al₂O₃ powder, alumina sol and ion-exchanged water to prepare a slurry. The slurry is wash-coated on a honeycomb support to form a catalyst layer.

Another example of the three-way catalysts is described in Published Japanese Patent Application No. 2003-126694. The publication document discloses an exhaust gas purification catalyst including: a support made of a CeO₂-ZrO₂ composite oxide (mixed oxide); particles of at least one metal oxide selected from Al oxide, Ni oxide and Fe oxide and carried on the support; and a precious metal carried on the support. The metal oxide particles restrict the movement of precious metal particles on the support, thereby hindering the sintering of the precious metal particles. However, the metal oxide particles disclosed in the examples in the document are Al₂O₃ particles only. In the examples, a CeO₂-ZrO₂ mixed oxide and an aqueous solution of aluminium nitrate are mixed, and drops of aqueous ammonia are put into the mixture to neutralize acidity and separate out a precipitate, followed by filtration, rinsing, drying and calcination. The powder thus obtained is impregnated with a solution of Pt, evaporated to dryness, dried and calcined, thereby obtaining a catalyst powder. The document discloses neither example using Ni oxide particles nor example using Fe oxide particles.

Published Japanese Patent Application No. 2006-231321 discloses the formation of a catalyst layer on a support by mixing powder of a first metal oxide and a colloid solution in which colloid particles of a second metal oxide are dispersed, applying the mixture to the support and then subjecting the support to heat treatment. The document further discloses that since the second metal oxide functions as a matrix for the first metal oxide powder and the first metal oxide is immobilized to the support surface by the second metal oxide serving as a matrix, a thin coating can be evenly formed on the support with a high adherability to the support. The document further discloses that each of the first and second metal oxides is at least one selected from the group consisting of alumina, zirconia, titania, iron oxide, rare earth metal oxides, alkaline metal oxides and alkaline earth metal oxides. Examples in the document use an Al₂O₃ colloid as a colloid of the second mixed oxide.

Published Japanese Patent Application No. 2005-161143 discloses a catalyst in which particles of Rh, which is a catalytic precious metal, are placed at least one of at and between crystal lattice points of Ce-containing oxide particles having an oxygen storage/release capacity and serving as a support material and Rh particles are later carried also on the surface of the support material. In this case, Rh particles are immobilized to the insides and surfaces of the Ce-containing oxide particles. Therefore, the Ce-containing oxide particles, as compared with Ce-containing oxide particles with no Rh particles, drastically improve the oxygen storage/release capacity (i.e., the amount of oxygen storage/release and the speed of oxygen storage/release), which significantly contributes to improvement in exhaust gas purification performance.

There are commonly known lean-burn engines, such as diesel engines using a light oil-based fuel and lean-burn gasoline engines in which a gasoline-based fuel is burnt under fuel-lean conditions. An example of commonly known exhaust gas purification catalysts for such engines is a so-called NOx storage-reduction catalyst including a NOx trap material. The NOx trap material stores NOx (nitrogen oxides) in exhaust gas when the oxygen concentration in the exhaust gas is high, and releases stored NOx when the oxygen concentration is low. The NOx storage-reduction catalyst reduces the released NOx by reaction with hydrocarbon (HC) in the exhaust gas.

The NOx storage-reduction catalyst generally contains alumina, a Ce-containing oxide having an oxygen storage/release capacity, Pt or Rh serving as a catalytic metal, and an alkaline metal or alkaline earth metal serving as a NOx trap material. The alumina on which Pt is carried oxidizes NO in exhaust gas to NO₂ and thereby facilitates NOx storage into the NOx trap material. For example, if Ba is used as a NOx trap material, NOx is stored in the form of Ba(NO₃)₂. The Ce-containing oxide controls the oxidation-reduction (redox) conditions of Pt or Rh to promote NOx conversion and also acts to trap NOx. However, it is believed that the NOx trapping of the Ce-containing oxide is, unlike the NOx trap material such as Ba, mainly due to adsorption of NOx on the surfaces of the Ce-containing oxide particles, and that because of their less large specific surface area, the Ce-containing oxide particles cannot adsorb a large amount of NOx.

Published Japanese Patent Application No. 2008-30003 discloses a NOx trap catalyst including: a first catalyst layer (top layer) containing β-zeolite containing Fe and/or Ce; and a second catalyst layer (under layer) containing a precious metal and a cerium oxide-based material. In using the NOx trap catalyst, unlike the above-described NOx storage-reduction catalyst, the exhaust gas is first controlled to have a lean air-fuel ratio, whereby NO in the exhaust gas is oxidized to NO₂ by the precious metal in the first catalyst layer and NO₂ is adsorbed on the cerium oxide-based material. Next, the exhaust gas is controlled to have a rich air-fuel ratio, whereby the adsorbed NO₂ is reduced to NH₃ and NH₃ is adsorbed on zeolite in the first catalyst layer. Then, the exhaust gas is controlled to have a lean air-fuel ratio again, whereby NH₃ reacts with NOx in the exhaust gas to convert to N₂ and H₂O. In most of conventional lean NOx trap catalysts containing zeolite, Pt particles are carried on zeolite or ion-exchanged with zeolite. If part of Pt particles can be replaced with Fe or Ce particles, the amount of Pt used can be reduced.

Exhaust gas from lean-burn engines as described above is known to contain particulates (particulate matters; suspended particulate matters containing carbon particles). The release of such particulates into the atmosphere leads to increase in environmental load. Therefore, in conventional diesel engines, a filter for trapping particulates is disposed in the exhaust passage of the engine and the filter includes a catalyst layer for promoting the burning of the trapped particulates.

However, since exhaust gas from lean-burn engines has a low temperature, it is difficult to smoothly promote the burning of particulates simply by including a catalyst layer in the filter. To cope with this, an oxidation catalyst is disposed in the exhaust gas passage upstream of the filter. The oxidation catalyst oxidizes HC and carbon monoxide (CO) in the exhaust to produce reaction heat, and the reaction heat increases the temperature of exhaust gas flowing into the filter. Thus, relatively high-temperature exhaust gas flows into the filter to facilitate the burning of particulates on the filter. In regenerating the filter (burning off particulates deposited on the filter), the engine generally performs post injection, i.e., feeds fuel into the combustion chamber at the expansion or exhaust stroke, in order to supply HC and CO to the oxidation catalyst.

Most of such oxidation catalysts, as described as an example in Published Japanese Patent Application No. 2006-272064, have a catalyst layer formed on a support and containing Pt-carried alumina particles, Ce-containing oxide particles having an oxygen storage/release capacity and zeolite particles. The Ce-containing oxide particles store oxygen in oxygen-rich exhaust gas when the engine is in lean-burn operation. Furthermore, when the oxygen concentration in the exhaust gas is decreased owing to post injection or the like, the Ce-containing oxide particles release the stored oxygen as active oxygen to promote the oxidation of HC and CO due to Pt. The zeolite particles have the function of cracking HC of high amount of carbon in exhaust gas to HC of low amount of carbon and thereby promote the oxidation of HC due to Pt.

Selective catalytic reduction (SCR) catalysts for converting NOx (hereinafter referred to as NOx SCR catalysts) are also commonly known. For these catalysts, a reducer, such as aqueous ammonia or aqueous urea, is supplied from a tank storing the reducer into the engine exhaust gas passage upstream of a NOx trap catalyst to convert NOx in the exhaust gas by reduction. For example, Published Japanese Patent Application No. 2007-315328 discloses a NOx SCR catalyst, wherein urea is added for reduction and the catalyst uses zeolite on which Fe is carried by ion exchange.

Published Japanese Patent Application No. 2007-534467 describes a lean NOx catalyst in which Fe is carried on zeolite and a Zr-containing oxide by impregnating zeolite and the Zr-containing oxide with an aqueous solution of iron nitrate.

### SUMMARY

Iron oxide is known to have an oxygen storage/release capacity, like CeO₂. From this point, it is conceivable to carry iron oxide on Ce-containing oxide particles, such as CeO₂-ZrO₂ mixed oxides disclosed in Published Japanese Patent Application Nos. 2003-220336 and 2003-126694. The inventors subjected Ce-containing oxide powder to impregnation with iron nitrate, evaporation to dryness, drying and calcination and examined the oxygen storage/release capacity of the obtained powder. The examination result showed that the obtained powder had an improved oxygen storage/release capacity but the degree of improvement was not so large. Furthermore, the powder was subjected to a predetermined heat aging in consideration of a long-term use of the catalyst. The examination result after the heat aging showed that the oxygen storage/release capacity of the powder decreased to a considerably low level. Furthermore, the iron oxide particles derived from iron nitrate had a large diameter of 500 nm or more.

The inventors also subjected Rh-carried Ce-containing oxide particles as described in Published Japanese Patent Application No. 2005-161143 to impregnation with an aqueous solution of iron nitrate, drying and calcination. The obtained catalyst had not only a poorer oxygen storage/release capacity but also a poorer exhaust gas purification performance than a catalyst obtained from Pt-carried Ce-containing oxide particles not subjected to impregnation with an aqueous solution of iron nitrate.

The inventors also subjected Rh-carried alumina particles, Ce-containing oxide particles and zeolite particles to impregnation with an aqueous solution of iron nitrate, drying and calcination. The obtained oxidation catalyst had a poorer oxidative conversion performance for HC and CO than the catalyst impregnated with no aqueous solution of iron nitrate.

In consideration of the fact that since Ce-containing oxides having oxygen storage/release capacity have NOx adsorption capacity, iron oxide likewise having an oxygen storage/release capacity may exhibit some effect of NOx adsorption, the inventors also subjected a Ce-containing oxide to impregnation with iron nitrate and examined its NOx adsorption capacity. As a result, the Ce-containing oxide impregnated with iron nitrate had a somewhat improved NOx adsorption capacity but did not exhibit a significant improvement.

In relation to NOx SCR catalysts, TiO₂ is known as a typical catalytically active species and offers the advantage of eliminating the need to use a precious metal, such as Pt, Pd or Rh. However, the temperature at which TiO₂ starts to exhibit its catalytic activity is approximately 200°C. This makes it important to improve the NOx conversion efficiency at low exhaust gas temperature. A key to solving this problem is to ensure that the catalyst adsorbs NOx at low exhaust gas temperature.

In view of this, the inventors examined the NOx adsorption capacity of Fe-impregnated zeolite (Fe ion-exchanged zeolite) obtained by impregnating zeolite with iron nitrate and thereby carrying Fe on the zeolite. The Fe-impregnated zeolite can be believed to contain iron oxide. However, the examination result showed that the catalyst containing the zeolite did not exhibit a desired NOx adsorption capacity after it was heat-aged. The reason for this can be considered to be that iron nitrate adhering to the surfaces and pores of zeolite particles was converted to iron oxide with the progress of calcination of the catalyst and the iron oxide particles cohered and grew with the progress of calcination, and then further cohered and grew owing to the subsequent heat aging to partly break the crystal structure of the zeolite.

With the foregoing in mind, an object of the present invention is to effectively use iron oxide for improvement in oxygen storage/release capacity of the catalyst.

Another object of the present invention is to increase the oxygen storage/release capacity of the catalyst to attain a desired durability of the oxygen storage/release capacity even at a small amount of catalytic metal (extend the heat history time which it takes for the oxygen concentration downstream of the catalyst to reach the OBD threshold value).

A still another object of the present invention is to effectively use iron oxide to increase the NOx conversion performance of the catalyst and particularly to effectively convert NOx over a wide exhaust gas temperature range from low to high temperatures.

A still another object of the present invention relates to a NOx storage-reduction catalyst and is to improve the resistance to sulfur poisoning of the NOx storage-reduction catalyst.

A still another object of the present invention relates to the NOx storage-reduction catalyst and is that even if part of NOx released from the NOx trap material is reduced to NH₃, the NOx storage-reduction catalyst can hinder the release of NH₃ into the atmosphere.

A still another object of the present invention relates to an exhaust gas purification catalyst containing Rh-carried Ce-containing oxide particles and is to effectively use iron oxide to increase the exhaust gas purification performance of the catalyst.

A still another object of the present invention relates to an oxidation catalyst and is to effectively use iron oxide for improvement in oxygen storage/release capacity of the catalyst to enhance the performance of HC and CO oxidization.

A still another object of the present invention is to effectively increase the temperature of exhaust gas flowing into the filter when the oxidation catalyst is disposed in the exhaust gas passage upstream of the filter.

A still another object of the present invention relates to a NOx SCR catalyst and is to effectively use iron oxide to increase the NOx conversion performance of the catalyst.

A still another object of the present invention is to use iron oxide not only for improvement in oxygen storage/release capacity of the catalyst but also as a binder for forming a catalyst layer on the support.

To attain the above objects, in the present invention, a large number of fine iron oxide particles are dispersed in the catalyst layer.

An aspect of the present invention is directed to an exhaust gas purification catalyst in which a catalyst layer is formed on a support, the catalyst layer containing: Ce-containing oxide particles having an oxygen storage/release capacity; and a catalytic metal. In the exhaust gas purification catalyst, the catalyst layer further contains a large number of iron oxide particles dispersed therein, at least some of the iron oxide particles are fine iron oxide particles of 300 nm diameter or less, at least some of the fine iron oxide particles are in contact with the Ce-containing oxide particles, and the proportion of the area of the fine iron oxide particles to the total area of all the iron oxide particles is 30% or more when observed by electron microscopy.

The expression that "the proportion of the area of the fine iron oxide particles of 300 nm diameter or less to the total area of all the iron oxide particles is 30% or more" means that the catalyst layer contains a large number of the fine iron oxide particles dispersed therein. Furthermore, because the secondary particle diameter of the Ce-containing oxide particles is normally a few µm, the above expression also means that a plurality of fine iron oxide particles are dispersed on and in contact with each of at least some of the Ce-containing oxide particles and a relatively large amount of fine iron oxide particles adhere to the Ce-containing oxide particle. Therefore, even if the amount of catalytic metal is small, the fine iron oxide particles effectively act to increase the oxygen storage/release capacity of the catalyst layer, coupled with the Ce-containing oxide particles, thereby providing early activation of the catalyst (expression of activity from a relatively low temperature).

Specifically, it can be considered that at the contact point between a fine iron oxide particle and a Ce-containing oxide particle, the oxygen atoms in both the particles become unstable, this increases the oxygen storage/release capacities of both the particles, and, as a result, the catalyst promotes the oxidation reaction of hydrocarbons (HC) and CO in exhaust gas. Furthermore, even if the period of service of the catalyst is extended to some degree (the catalyst is often exposed to high-temperature exhaust gas), the catalyst can be prevented from degrading the oxygen storage/release capacity to a low level. Therefore, it can be avoided that despite that the exhaust gas purification performance is not decreased so much, the OBD system for oxygen storage/release capacity diagnoses the catalyst as being deteriorated.

On the other hand, large-diameter iron oxide particles of 500 nm diameter or more derived from an aqueous solution of iron nitrate cannot exhibit effects as good as the above fine iron oxide particles of 300 nm diameter or less. The reason for this can be considered to be that large-diameter iron oxide particles of 500 nm diameter or more are less likely to express the interaction with the Ce-containing oxide particles. Furthermore, it can be inferred that iron nitrate adhering to the surfaces and pores of the Ce-containing oxide particles is converted to iron oxide with the progress of calcination of the catalyst and the iron oxide particles cohere and grow with the progress of calcination, and then further cohere and grow owing to the subsequent exposure to high-temperature exhaust gas, resulting in reduced surface areas of the Ce-containing oxide particles.

The proportion of the area of the fine iron oxide particles to the total area of all the iron oxide particles is preferably 40% or more. As for iron oxide particles having a diameter of 50 to 300 nm, both inclusive, the proportion of the area thereof to the total area of all the iron oxide particles is preferably approximately 40% to 95%, both inclusive.

The fine iron oxide particles may constitute at least part of a binder that retains the Ce-containing oxide particles and the like contained in the catalyst layer onto the support. Specifically, in a generic catalyst, the binder can be defined as follows:

A. The binder gives a viscosity to a slurry wash-coated on a support, thereby evenly dispersing, in the slurry, particles of an oxygen storage component and other promoters that carry a catalytic metal and stably retaining the wash-coated layer prior to drying and calcination on the support.

Therefore, commonly-used binders include a colloid solution in which colloid particles (of hydroxide, hydrate, oxide or the like) of approximately 1 to 50 nm diameter are dispersed (but commercially available alumina sols and colloidal silicas have a diameter of approximately 10 to 30 nm).

B. The binder after being subjected to drying and calcination is dispersed in fine particles substantially evenly in the catalyst layer, interposed between the promoter particles to bind them and enters a large number of fine recesses and fine holes in the support surface to prevent the catalyst layer from being peeled off from the support (anchor effect).

Therefore, commonly-used binders include a binder that, after subjected to drying and calcination, forms oxide particles smaller in diameter than promoter particles and adheres as oxide particles to the promoter particles and the support.

C. Where a catalytic metal, a NOx storage material, an HC adsorbing material or the like is later carried on the support by impregnation, the binder functions as a support material for carrying such a catalyst component.

D. The binder particles form fine channels between them and with the promoter particles to allow exhaust gas to pass through the fine channels.

E. The amount of binder in the catalyst layer is generally selected to be 5% to 20% by mass of the total amount of the catalyst layer.

The fine iron oxide particles of 300 nm diameter or less are smaller than the mean diameter (a few µm) of the Ce-containing oxide particles, are dispersed substantially evenly in the catalyst layer, interposed between the Ce-containing oxide particles to bind them, and enter a large number of fine recesses and fine holes in the support surface to prevent the catalyst layer from being peeled off from the support. Therefore, the iron oxide particles function also as a binder in the catalyst layer.

The binder in the catalyst layer may be made of the fine iron oxide particles only. However, in order to provide a stable catalyst layer, the catalyst layer preferably contains as the binder oxide particles of at least one kind of metal selected from transition metals and rare earth metals (for example, alumina particles, ZrO₂ particles or CeO₂ particles) in addition to the fine iron oxide particles. In order to give a viscosity to a slurry wash-coated on a support to evenly disperse the catalyst components in the slurry and stably retain the wash-coated layer prior to drying and calcination on the support, the fine iron oxide particles and the metal oxide particles, both of which constitute the binder, are preferably made from a sol in which an iron compound as a precursor of the iron oxide is dispersed in colloid particles and a sol in which a metal compound as a precursor of the metal oxide is dispersed in colloid particles, respectively.

At least some of the fine iron oxide particles are preferably hematite, and the iron oxide particles are preferably made from a sol in which maghemite, goethite and wustite are dispersed in colloid particles.

The proportion of the fine iron oxide particles in the catalyst layer is preferably 5% to 30% by mass, both inclusive. The mass ratio of the fine iron oxide particles to CeO₂ in the Ce-containing oxide particles is preferably 25/100 to 210/100 by mass, both inclusive. The reason for this is as follows: If the proportion of the fine iron oxide particles is too small, the effect of increasing the oxygen storage/release capacity of the catalyst layer is not sufficiently expressed. On the other hand, if the proportion is too large, this is advantageous in increasing the oxygen storage/release capacity but decreases the exhaust gas conversion efficiency.

The catalyst layer may contain as the catalytic metal at least one kind of precious metal selected from Pt, Pd and Rh, and the amount of the catalytic metal carried on the support may be 1.0 g or less per liter of the support.

In another aspect of the present invention, the catalyst layer further contains a NOx trap material other than the Ce-containing oxide particles, and at least some of the fine iron oxide particles are in contact with the Ce-containing oxide particles and/or the NOx trap material.

With the above aspect, a NOx storage-reduction catalyst can be formed. As will be apparent from the later description of experimental data, as the catalyst increases the NOx conversion performance, it increases the resistance to sulfur poisoning and reduces the release of NH₃ into the atmosphere. The reason for this can be believed to be that the fine iron oxide particles of 300 nm diameter or less are dispersed on and in contact with each of the Ce-containing oxide particles and the NOx trap material particles to promote the expression of interaction with the Ce-containing oxide particles and the NOx trap material. Therefore, it can be believed that even if the amount of catalytic metal is small, the fine iron oxide particles effectively act to increase the oxygen storage/release capacity of the catalyst layer, coupled with the action of the Ce-containing oxide particles. Furthermore, it can be believed that the fine iron oxide particles in contact with the Ce-containing oxide particles increase the basicity of the Ce-containing oxide particles to enhance the NOx adsorption capacity thereof, which advantageously acts to convert NOx by reduction. Moreover, as will be later described based on data, the fine iron oxide particles also contribute to the adsorption of sulfur components and NH₃, whereby the NOx trap material can be hindered from being poisoned with sulfur and the release of NH₃ into the atmosphere can be reduced. Therefore, the catalyst according to this aspect is useful as a lean NOx catalyst.

Examples of the NOx trap material used include alkaline earth metals, typified by Ba, and alkaline metals.

In still another aspect, the catalyst layer contains as the Ce-containing oxide particles CeZr-based mixed oxide particles which are doped with a catalytic precious metal and on the surfaces of which a catalytic precious metal is carried, the mass proportion of the fine iron oxide particles to the total amount of the fine iron oxide particles and the CeZr-based mixed oxide particles is 2% to 45% by mass, both inclusive, and the mass proportion of the catalytic precious metal carried on the surfaces of the mixed oxide particles to the total amount of the catalytic precious metal doped in the mixed oxide particles and the catalytic precious metal carried on the surfaces of the mixed oxide particles is more than 2% by mass and not more than 98% by mass.

In this case, because the secondary particle diameter of the CeZr-based mixed oxide particles is normally a few µm, the fine iron oxide particles of 300 nm diameter or less in contact with the CeZr-based mixed oxide particles act as a steric hindrance to cohesion of catalytic precious metal particles carried on the surfaces of the CeZr-based mixed oxide particles to restrain sintering of the catalytic precious metal (enhance the thermal resistance of the catalyst).

As will be apparent in the later-described experimental data, if the mass proportion of the fine iron oxide particles to the total amount of the fine iron oxide particles and the CeZr-based mixed oxide particles is below 2% by mass or over 45% by mass, the exhaust gas purification performance of the catalyst is degraded. The reason for this can be believed to be that if the amount of the fine iron oxide particles is below 2% by mass, it is not sufficient to express the above effects and that if the amount of the fine iron oxide particle is over 45% by mass, the temperature increase of the catalyst is delayed because the specific heat of iron oxide is several times higher than that of the CeZr-based mixed oxide.

As also will be apparent in the later-described experimental data, if the mass proportion of the catalytic precious metal carried on the surfaces of the CeZr-based mixed oxide particles to the total amount of the catalytic precious metal doped in the mixed oxide particles and the catalytic precious metal carried on the surfaces of the mixed oxide particles is not more than 2% by mass or over 98% by mass, the exhaust gas purification performance of the catalyst is degraded. The reason for this can be believed as follows: Although the presence of catalytic precious metal carried on the surfaces of the CeZr-based mixed oxide particles is needed for catalytic reaction, if the mass proportion of catalytic precious metal carried on the mixed oxide particles is not more than 2% by mass, it is not sufficient to provide a desired catalytic reaction. On the other hand, if the mass proportion of catalytic precious metal carried on the mixed oxide particles is over 98% by mass, the oxygen storage/release capacity of the CeZr-based mixed oxide is decreased. In other words, the mass proportion of catalytic precious metal of over 98% by mass means that the amount of catalytic precious metal doped in the CeZr-based mixed oxide particles is too small to enhance the oxygen storage/release capacity of the CeZr-based mixed oxide.

The catalytic precious metal is preferably at least one kind of precious metal selected from Pt, Pd and Rh.

Still another aspect of the present invention is directed to an exhaust gas purification catalyst for converting at least HC and CO in exhaust gas coming from a lean-burn engine. The exhaust gas purification catalyst includes: a support; and a catalyst layer formed on the support and containing alumina particles on which Pt is carried, Ce-containing oxide particles having an oxygen storage/release capacity and zeolite particles, wherein the catalyst layer further contains a large number of iron oxide particles dispersed therein, at least some of the iron oxide particles are fine iron oxide particles of 300 nm diameter or less, at least some of the iron oxide particles are in contact with the alumina particles, the Ce-containing oxide particles and/or the zeolite particles, and the proportion of the area of the fine iron oxide particles to the total area of all the iron oxide particles is 30% or more when observed by electron microscopy.

Because the secondary particle diameter of the alumina particles, the Ce-containing oxide particles and the zeolite particles is normally a few µm, fine iron oxide particles are dispersed on and in contact with each of at least some of the alumina particles, each of at least some of the Ce-containing oxide particles and each of at least some of the zeolite particles and a relatively large amount of fine iron oxide particles adhere to each of these particles. Therefore, even if the amount of catalytic metal is small, the catalyst increases the performance of oxidizing HC and CO in exhaust gas.

Furthermore, since in the above aspect the fine iron oxide particles are in contact with the Pt-carried alumina particles, it can be believed that oxygen dissociatively adsorbed on the fine iron oxide particles is likely to spill over HC and CO adsorbed on Pt particles on the surfaces of the alumina particles and this promotes the oxidation of HC and CO. Still furthermore, the zeolite particles is increased in its amount of acid in solid form by contact with fine iron oxide particles and thereby becomes likely to attract multiple bonds of HC or CO, particularly attract HC to the catalyst surface while dissociating H-C bonds and C-C bonds. Moreover, oxygen dissociatively adsorbed on the fine iron oxide particles is likely to spill over and be supplied to HC and CO, thereby promoting the oxidation reaction of HC and CO.

Pt serving as a catalytic metal may be carried not only on the alumina particles but also on the Ce-containing oxide particles and/or the zeolite particles, and at least another kind of catalytic metal, such as Pd or Rh, may be also carried, together with Pt, on the alumina particles, the Ce-containing oxide particles and/or the zeolite particles.

Still another aspect of the present invention is directed to an exhaust gas purification catalyst for selectively reducing NOx in exhaust gas with a reducer supplied in an oxygen-rich atmosphere. The exhaust gas purification catalyst includes: a support; and a catalyst layer formed on the support and containing Ce-containing oxide particles, zeolite particles and a catalytic metal, wherein the catalyst layer further contains a large number of iron oxide particles dispersed therein, at least some of the iron oxide particles are fine iron oxide particles of 300 nm diameter or less, at least some of the iron oxide particles are in contact with the Ce-containing oxide particles and/or the zeolite particles, and the proportion of the area of the fine iron oxide particles to the total area of all the iron oxide particles is 30% or more when observed by electron microscopy.

Preferable examples of the reducer include aqueous ammonia or aqueous urea. The reducer, such as aqueous ammonia or aqueous urea, is decomposed to produce NH₃, and the catalytic metal promotes selective reduction of NOx in exhaust gas by the reaction with NH₃.

According to the catalyst of the above aspect, the NOx conversion performance can be increased. The reason for this can be believed to be that the fine iron oxide particles in contact with the Ce-containing oxide particles increase the basicity of the Ce-containing oxide particles to enhance the NOx adsorption capacity thereof, the fine iron oxide particles in contact with the zeolite particles increase the acidity of the zeolite particles in solid form to enhance the NH₃ adsorption capacity of thereof, and the synergy of these effects increases the NOx selective reduction performance of the catalyst.

The catalytic metal for NOx selective reduction is preferably a transition metal other than Pt, Pd, Rh and Fe.

### BRIEF DESCRIPTION OF THE DRAWINGS

FIG. 1 is a cross-sectional view schematically showing an example of a three-way catalyst.
FIG. 2 is a STEM image of a catalyst material using an iron oxide sol.
FIG. 3 is a mapping of distribution of the relative Fe atom concentration in the catalyst material using the iron oxide sol.
FIG. 4 is a mapping of distribution of the relative Zr atom concentration in the catalyst material using the iron oxide sol.
FIG. 5 is a mapping of distribution of the relative Ce atom concentration in the catalyst material using the iron oxide sol.
FIG. 6 is a STEM image of the aged catalyst material using the iron oxide sol.
FIG. 7 is a mapping of distribution of the relative Fe atom concentration in the aged catalyst material using iron oxide sol.
FIG. 8 is a mapping of distribution of the relative Zr atom concentration in the aged catalyst material using iron oxide sol.
FIG. 9 is a mapping of distribution of the relative Ce atom concentration in the aged catalyst material using iron oxide sol.
FIG. 10 is a graph showing X-ray diffraction patterns of a dried product of the iron oxide sol, a catalyst material (calcined product) and an aged catalyst material.
FIG. 11 is a STEM image of a catalyst material using ferric nitrate.
FIG. 12 is a mapping of distribution of the relative Fe atom concentration in the catalyst material using ferric nitrate.
FIG. 13 is a mapping of distribution of the relative Zr atom concentration in the catalyst material using ferric nitrate.
FIG. 14 is a mapping of distribution of the relative Ce atom concentration in the catalyst material using ferric nitrate.
FIG. 15 is a STEM image of the aged catalyst material using ferric nitrate.
FIG. 16 is a mapping of distribution of the relative Fe atom concentration in the aged catalyst material using ferric nitrate.
FIG. 17 is a mapping of distribution of the relative Zr atom concentration in the aged catalyst material using ferric nitrate.
FIG. 18 is a mapping of distribution of the relative Ce atom concentration in the aged catalyst material using ferric nitrate.
FIG. 19 is a block diagram of an oxygen storage/release amount measurement system.
FIG. 20 is a graph showing changes with time in A/F ratios before and after the catalyst and in the difference between the A/F ratios upon measurement of the oxygen storage/release amount.
FIG. 21 is a graph showing changes with time in difference between A/F ratios before and after the catalyst upon measurement of the oxygen storage/release amount.
FIG. 22 is a graph showing changes with temperature in oxygen release amounts of catalyst samples when being fresh.
FIG. 23 is a graph showing changes with temperature in oxygen release amounts of the catalyst samples after being aged.
FIG. 24 is a graph showing the oxygen release amounts of the catalyst samples after being aged.
FIG. 25 is a graph showing the light-off temperatures of the catalyst samples when being fresh.
FIG. 26 is a graph showing the light-off temperatures of the catalyst samples after being aged.
FIG. 27 is a graph showing the HC conversion efficiencies of the catalyst samples when being fresh.
FIG. 28 is a graph showing the CO conversion efficiencies of the catalyst samples when being fresh.
FIG. 29 is a graph showing the NOx conversion efficiencies of the catalyst samples when being fresh.
FIG. 30 is a graph showing the HC conversion efficiencies of the catalyst samples after being aged.
FIG. 31 is a graph showing the CO conversion efficiencies of the catalyst samples after being aged.
FIG. 32 is a graph showing the NOx conversion efficiencies of the catalyst samples after being aged.
FIG. 33 is a graph showing effects of the amount of iron oxide particles carried on Catalyst Sample A on the oxygen release amount and the HC conversion efficiency.
FIG. 34 is a graph showing the light-off temperatures T50 of Inventive and Conventional Examples of a three-way catalyst.
FIG. 35 is a cross-sectional view schematically showing an example of a NOx storage-reduction catalyst.
FIG. 36 is a graph showing the NOx adsorption capacity and NH₃ adsorption capacity of Ce-containing oxide-based catalyst materials.
FIG. 37 is a graph showing the lean NOx conversion efficiencies of Inventive and Comparative Examples of the NOx storage-reduction catalyst.
FIG. 38 is a graph showing the lean NOx conversion efficiencies of Inventive and Comparative Examples of the NOx storage-reduction catalyst after being aged, after being poisoned with sulfur and after being reduced.
FIG. 39 is a cross-sectional view schematically showing another example of the three-way catalyst.
FIG. 40 is a view schematically showing the relationship between a CeZr-based mixed oxide particle and fine iron oxide particles.
FIG. 41 is a view showing how an oxidation catalyst and a particulate filter are disposed in an exhaust gas passage.
FIG. 42 is a cross-sectional view schematically showing an example of the oxidation catalyst.
FIG. 43 is a graph showing the light-off temperatures T50 of Inventive and Comparative Examples of the oxidation catalyst.
FIG. 44 is a graph showing the properties of Inventive and Comparative Examples of the oxidation catalyst in terms of how much they increase the exhaust gas temperature.
FIG. 45 is a graph showing the relationship between the amount of iron oxide derived from an iron oxide sol and the light-off temperature T50 for HC conversion.
FIG. 46 is a cross-sectional view schematically showing an example of a NOx SCR catalyst.
FIG. 47 is a graph showing the NOx adsorption amounts of zeolite-based catalyst materials and Ce-containing oxide-based catalyst materials.
FIG. 48 is a graph showing the NH₃ adsorption amounts of the zeolite-based catalyst materials and the Ce-containing oxide-based catalyst materials.
FIG. 49 is a graph showing the NOx conversion efficiencies of Inventive and Comparative Examples of the NOx SCR catalyst.
FIG. 50 is a graph schematically showing changes in the oxygen concentration and the amount of EM downstream of the catalyst with increasing vehicle travelling distance.

### DETAILED DESCRIPTION

Hereinafter, preferred embodiments of the invention will be described with reference to the drawings. Note that the following description of the preferred embodiments is merely illustrative in nature and is not intended to limit the scope, applications and use of the invention.

### [THREE-WAY CATALYST]

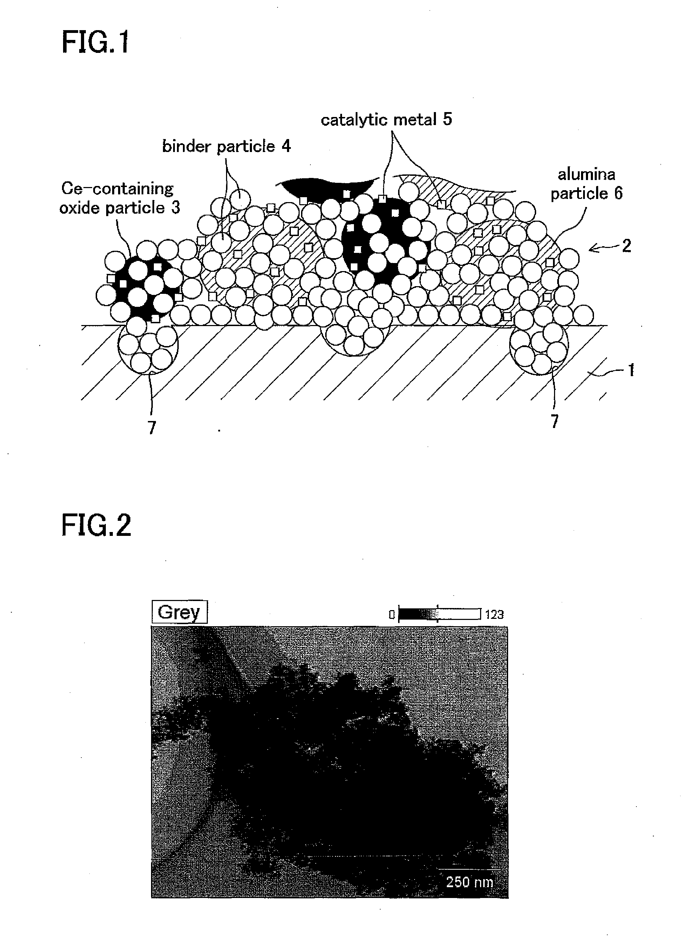

FIG. 1 schematically shows, as an example of an exhaust gas purification catalyst, a three-way catalyst suitable for conversion of exhaust gas emanating from vehicles. In this figure, reference numeral 1 denotes a cell wall of a honeycomb support made of an inorganic oxide and reference numeral 2 denotes a catalyst layer formed on the cell wall 1. The catalyst layer 2 contains Ce-containing oxide particles 3 having an oxygen storage/release capacity, binder particles 4, a catalytic metal 5 other than Fe, and, in the example shown in the figure, also alumina particles 6 as promoter particles other than the Ce-containing oxide particles 3. The catalyst layer 2 may contain, in addition to the Ce-containing oxide particles 3 and the alumina particles 6, at least another kind of promoter particles, such as HC adsorbing material particles or NOx storage material particles. The binder particles 4 are formed of metal oxide particles having a smaller mean diameter than the respective mean diameters of the Ce-containing oxide particles 3 and the alumina particles 6, and at least some of the binder particles 4 are formed of fine iron oxide particles having a diameter of 300 nm or less. In other words, the binder may be made of a combination of fine iron oxide particles and at least another kind of metal oxide particles.

The binder particles 4 containing the above fine iron oxide particles are dispersed approximately evenly throughout the catalyst layer 2 and interposed between the promoter particles (i.e., the Ce-containing oxide particles 3, the alumina particles 6 and the like) to bind the promoter particles. Therefore, at least some of the fine iron oxide particles are in contact with the Ce-containing oxide particles 3. In addition, the binder particles 4 fill in pores (fine recesses and fine holes) 7 in the surface of the support cell wall 1 and retain the catalyst layer 2 on the cell wall 1 by their anchor effect. The catalytic metal 5 is carried on the promoter particles (the Ce-containing oxide particles 3, the alumina particles 6 and the like).

### <PREPARATION OF CATALYST>

Ferric nitrate is dissolved in ethanol at a rate of 40.4 g per 100 mL of ethanol and the product thus obtained is refluxed at 90°C to 100°C for two to three hours, thereby obtaining a liquid in slurry form, i.e., an iron oxide sol (a binder). Then, Ce-containing oxide powder is mixed with respective suitable amounts of iron oxide sol and ion-exchanged water to prepare a slurry. If necessary, another kind of binder is also added. The obtained slurry is coated on a support, followed by drying and calcination. The coated layer on the support is impregnated with a solution of catalytic metal, followed by drying and calcination. In the above manner, an exhaust gas purification catalyst is obtained.

At least another kind of promoter material, such as alumina powder, may be added to the slurry. The coated layer may be impregnated with, in addition to the solution of catalytic metal, a solution of alkaline earth metal, rare earth metal or the like serving as a NOx storage material so that the NOx storage material can be carried on the coated layer. Alternatively, the catalytic metal may be in advance carried on the support material, such as the Ce-containing oxide particles.

### <DIAMETER OF IRON OXIDE PARTICLE>

The above iron oxide sol was mixed with a powder of CeZrNd mixed oxide (having a CeO₂:ZrO₂:Nd₂O₃ mass ratio of 23:67:10), which is a powder of Ce-containing oxide, and ion-exchanged water to prepare a slurry. The slurry was then coated on a support, dried at 150°C and calcined by keeping it at 500°C for two hours in the atmosphere, thereby obtaining a catalyst material. The iron oxide sol and the CeZrNd mixed oxide powder were mixed so that the mass ratio between iron oxide and the mixed oxide after the calcination was 2:8.

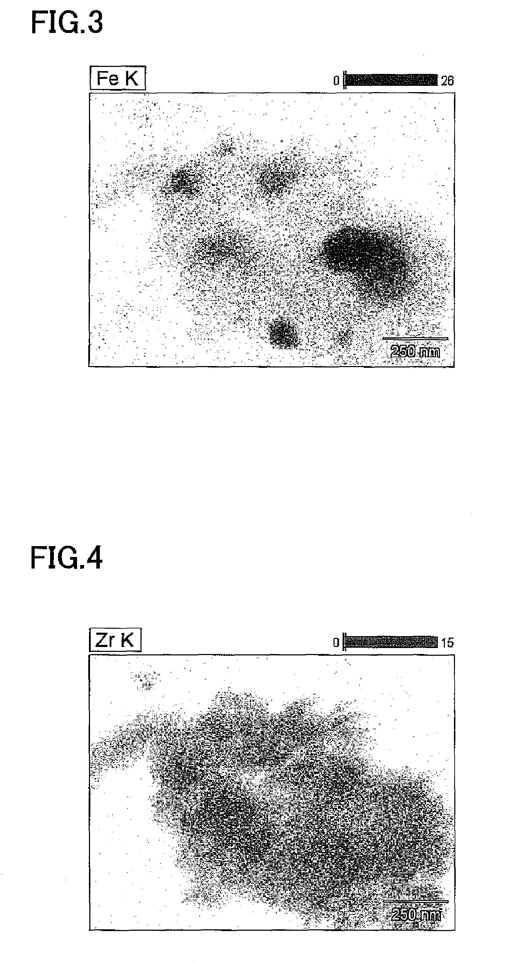

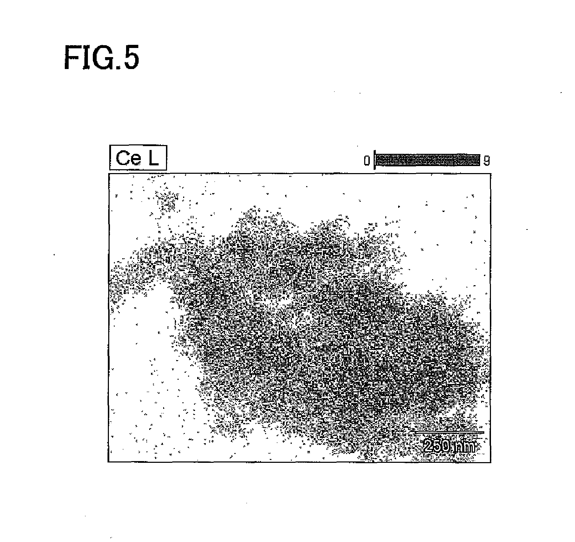

FIG. 2 shows a scanning transmission electron microscope (STEM) image of the obtained catalyst material with a transmission electron microscope, and FIGS. 3, 4 and 5 are respective mappings of distribution of the relative concentrations of Fe, Zr and Ce atoms in the catalyst material. FIGS. 2 to 5 show that the diameter of the CeZrNd mixed oxide particle is approximately 1 µm, that the diameter of the iron oxide particles is 300 nm or less, and that a plurality of iron oxide particles of 50 nm to 300 nm diameter are in contact with the CeZrNd mixed oxide particle (distributed on the mixed oxide particle). In this case, it can be said from the above microscopic observation that the proportion of the area of fine iron oxide particles of 300 nm diameter or less to the total area of all of iron oxide particles is 100% (in other words, all of the iron oxide particles have a diameter of 300 nm or less).

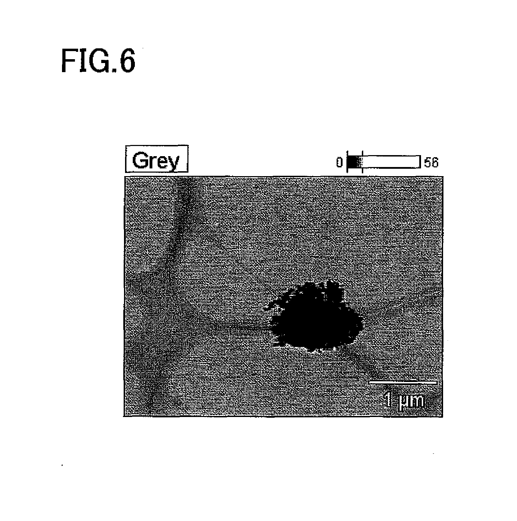

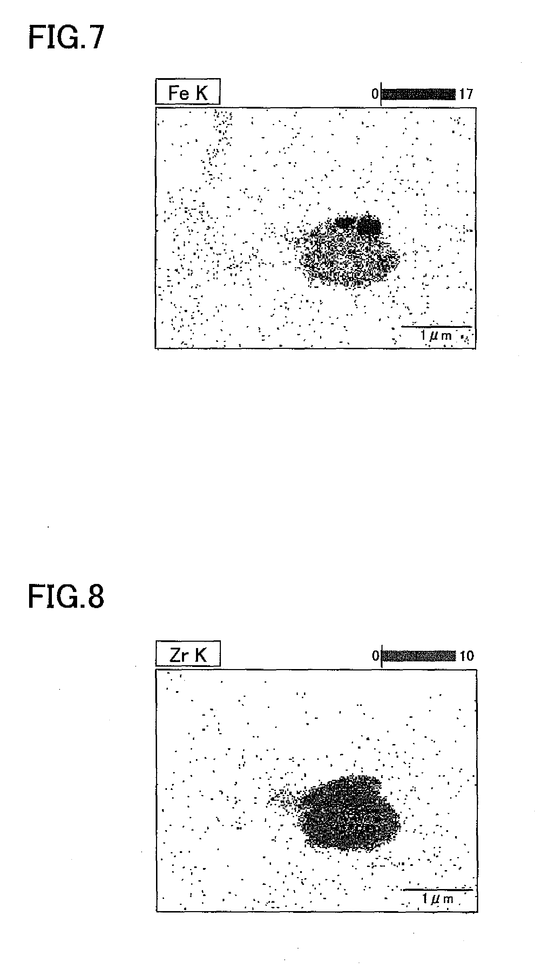

FIGS. 6 to 9 show a STEM image of the catalyst material after being aged (kept at 900°C for 24 hours in a nitrogen gas containing 2% oxygen and 10% water vapor) and respective mappings of distribution of the relative concentrations of Fe, Zr and Ce atoms in the aged catalyst material. As seem from these figures, the diameter of the CeZrNd mixed oxide particle is approximately 1 µm, the diameter of the iron oxide particles is 300 nm or less, and a plurality of iron oxide particles of 50 nm to 300 nm diameter are in contact with the CeZrNd mixed oxide particle (distributed on the mixed oxide particle). It can be seen from the electron microscopic observation that, also after the aging, all of the iron oxide particles have a diameter of 300 nm or less.

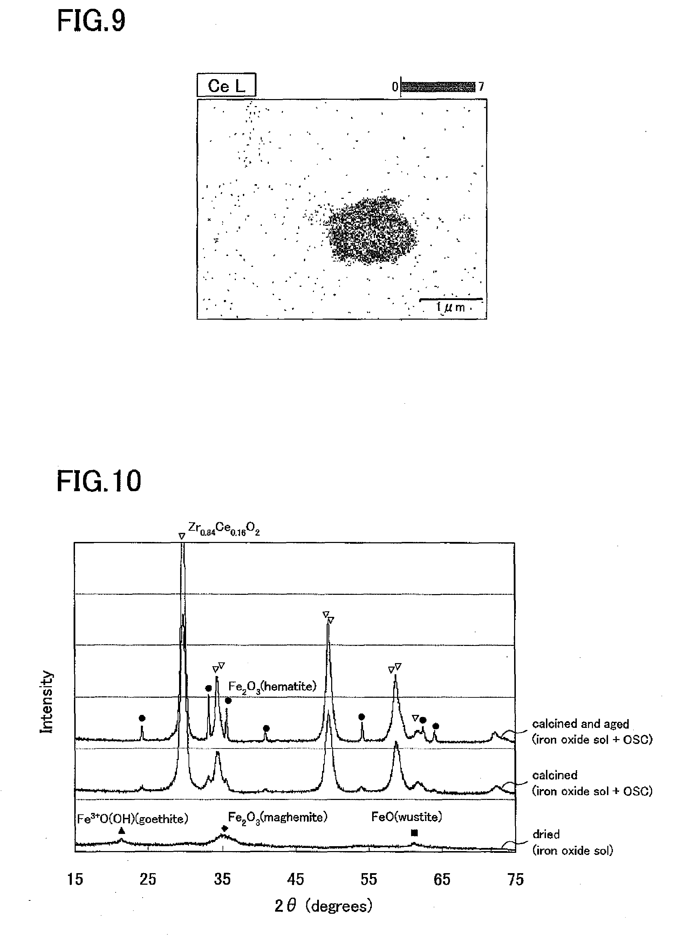

FIG. 10 is a graph showing X-ray diffraction patterns of a product obtained by drying the iron oxide sol at 150°C (a dried product), the above catalyst material before being aged (a calcined product) and the above catalyst material after being aged (a calcined and aged product). The term "OSC" in FIG. 10 indicates a CeZrNd mixed oxide (the same applies to the other figures). The figure shows that the iron oxide sol is a substance in which maghemite (γ-Fe₂O₃), goethite (Fe³⁺O(OH)) and wustite (FeO) are dispersed in colloid particles. Furthermore, the colloid particles of the iron oxide sol are formed into hematite (α -Fe₂O₃) by calcination.

TABLE 1 shows the relative peak intensities of the crystal planes of hematite of the calcined product not yet aged with respect to a peak intensity of the crystal plane (104) thereof of 100. TABLE 2 shows the relative peak intensities of the crystal planes of the hematite after being aged with respect to a peak intensity of the crystal plane (104) thereof of 100. In these tables, the sign "-" indicates that a reliable value could not be obtained because of overlapped peaks or a small peak.

**[TABLE 1]**

| Crystal plane | (012) | (104) | (110) | (113) | (024) | (116) | (214) | (330) |
|---|---|---|---|---|---|---|---|---|
| Relative peak intensity | - | 100 | - | - | - | 35 | - | - |

**[TABLE 2]**

| Crystal plane | (012) | (104) | (110) | (113) | (024) | (116) | (214) | (330) |
|---|---|---|---|---|---|---|---|---|
| Relative peak intensity | 31 | 100 | 63 | 29 | - | 54 | 35 | 28 |

After the aging, crystal planes of the hematite having high peak intensities determined by X-ray diffraction measurement are, in descending order, crystal planes (104), (110) and (116).

For comparison, the CeZrNd mixed oxide powder was impregnated with a solution of ferric nitrate, instead of using the iron oxide sol, and then subjected to drying and calcination in the same manner. The ferric nitrate and the CeZrNd mixed oxide powder were mixed so that the mass ratio between iron oxide and the mixed oxide after the calcination was 2:8.

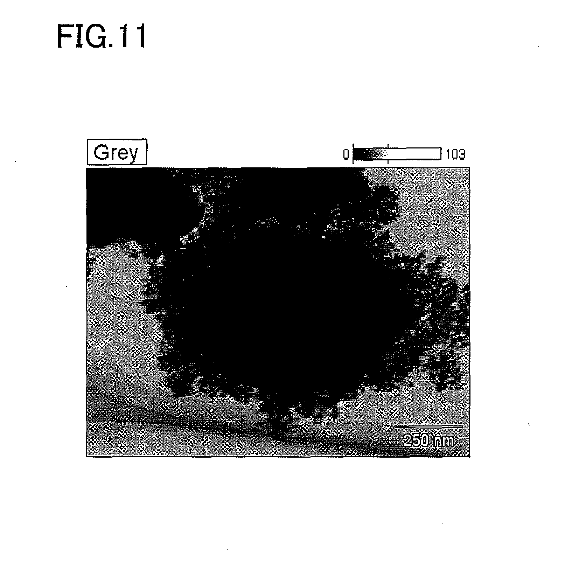

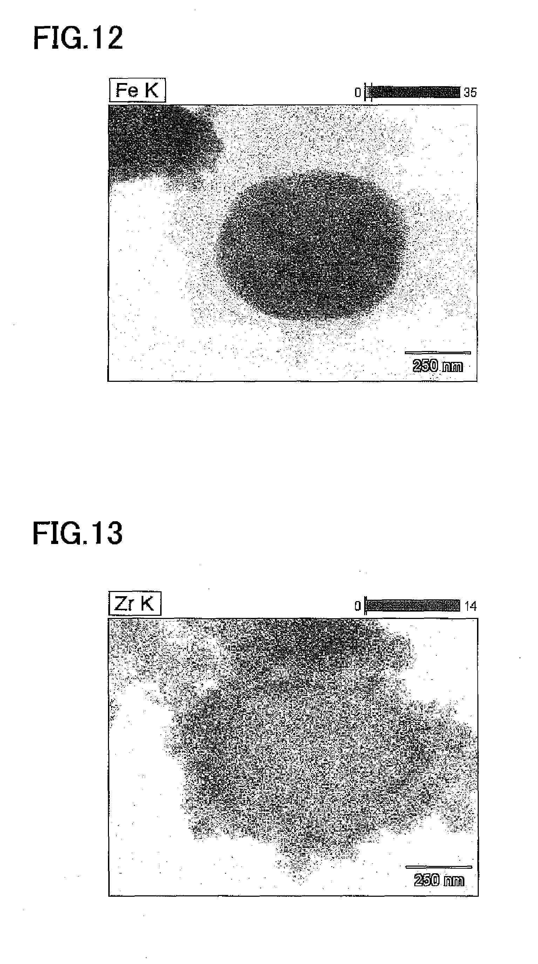

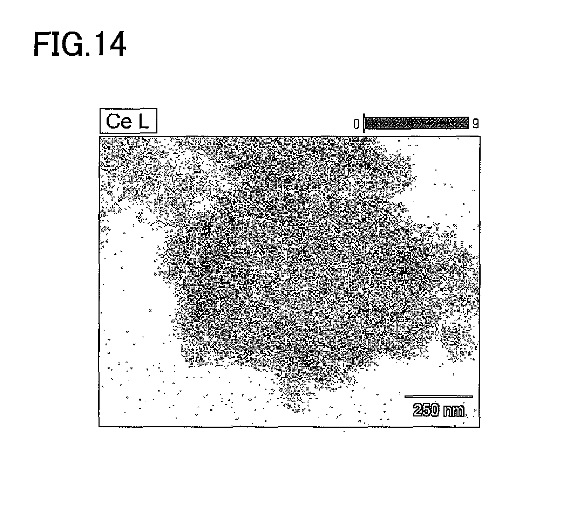

FIGS. 11 to 14 show a STEM image of the catalyst material obtained using ferric nitrate and respective mappings of distribution of the relative concentrations of Fe, Zr and Ce atoms in the catalyst material. As seem from these figures, the diameter of the CeZrNd mixed oxide particle is approximately 1 µm and the diameter of the iron oxide particles is approximately 600 to 700 nm.

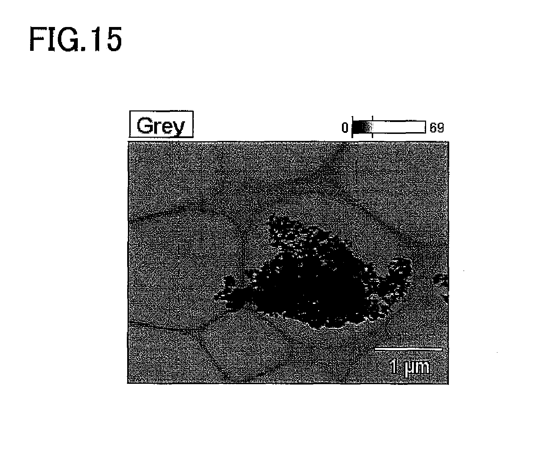

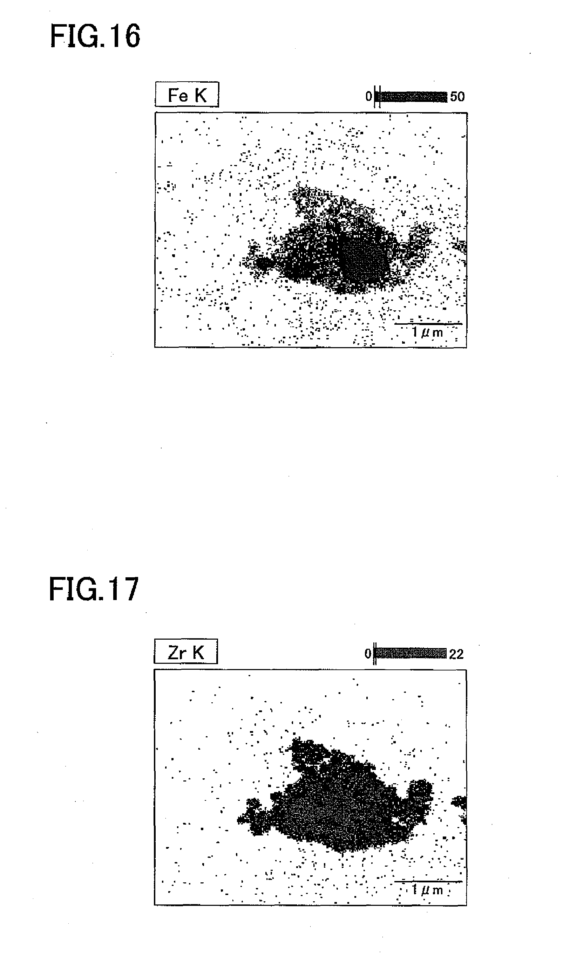

FIGS. 15 to 18 show a STEM image of the catalyst material using ferric nitrate and after being aged (under the same conditions as in the case of the iron oxide sol) and respective mappings of distribution of the relative concentrations of Fe, Zr and Ce atoms in the aged catalyst material. As seem from these figures, the diameter of the CeZrNd mixed oxide particle is approximately 1.5 to 2 µm, and one iron oxide particle of approximately 600 to 700 nm diameter and three iron oxide particles of approximately 100 nm are found on the CeZrNd mixed oxide particle. It can be said from the above electron microscopic observation that the proportion of the area of iron oxide particles of 300 nm diameter or less to the total area of all of iron oxide particles is below 10%.

In the case of iron oxide sol, colloid particles (maghemite, goethite and wustite) forming iron oxide particles through calcination are relatively stable Fe compounds and, therefore, less likely to cause growth of iron oxide particles. In contrast, in the case of ferric nitrate, iron oxide particles are produced from Fe ions having a high reactivity and, therefore, are likely to grow. This can be considered to be a reason for the above diameter difference between the iron oxide sol-derived iron oxide particles and the ferric nitrate-derived iron oxide particles.

### <OXYGEN STORAGE/RELEASE CAPACITY>

Sample A prepared using the above iron oxide sol, Sample B prepared using ferric nitrate and Sample C containing no iron component were examined in terms of their oxygen storage/release capacities. The amount of catalytic metal in each sample was zero.

### - PREPARATION OF CATALYST SAMPLE A -

The above CeZrNd mixed oxide, the iron oxide sol, a ZrO₂ binder and ion-exchanged water were mixed together to prepare a slurry. The slurry was coated on a support, dried at 150°C and calcined by keeping it at 500°C for two hours in the atmosphere. The slurry was prepared so that the amount of CeZrNd mixed oxide carried on the support was 80 g/L, the amount of iron oxide carried on the support using the iron oxide sol was 20 g/L and the amount of ZrO₂ carried on the support using the ZrO₂ binder was 10 g/L. Note that the amount of each component carried on the support is the amount of the component per liter of the support after the calcination. Used as the support was a honeycomb support made of cordierite having a volume of 25 mL, a cell wall thickness of 3.5 mil (8.89 x 10⁻² mm) and 600 cells per square inch (645.16 mm²).

### - PREPARATION OF CATALYST SAMPLE B -

Catalyst Sample B was prepared under the same conditions as Catalyst Sample A except that a solution of ferric nitrate was used instead of the iron oxide sol. The amount of iron oxide carried on the support using the solution of ferric nitrate was 20 g/L that is equal to the amount of iron oxide carried on the support using the iron oxide sol.

### - PREPARATION OF CATALYST SAMPLE C -

Catalyst Sample C was prepared under the same conditions as Catalyst Sample A except that the iron oxide sol was not used (i.e., the amount of iron oxide carried on the support was 0 g/L), the amount of CeZrNd mixed oxide carried on the support was 100 g/L and the amount of ZrO₂ carried on the support using the ZrO₂ binder was 10 g/L.

### - EVALUATION OF OXYGEN STORAGE/RELEASE CAPACITY -

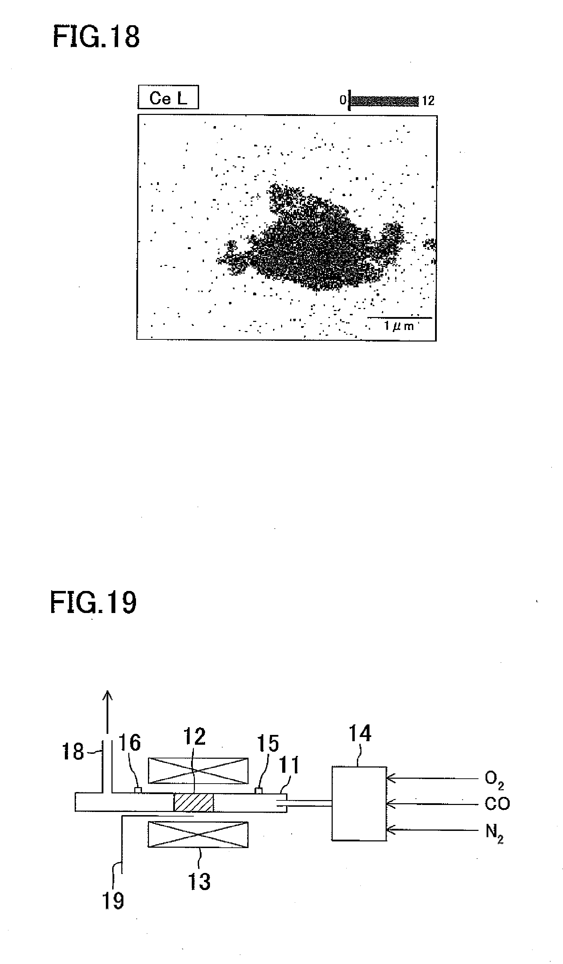

FIG. 19 shows the configuration of a test system for measuring the oxygen storage/release amount. In this figure, reference numeral 11 denotes a glass tube for retaining a catalyst sample 12. The catalyst sample 12 is heated to and kept at a predetermined temperature by a heater 13. The glass tube 11 is connected upstream of the catalyst sample 12 to a pulsed gas generator 14 capable of supplying each of O₂ and CO gases in pulses while supplying a base gas N₂, and has an exhaust part 18 formed downstream of the catalyst sample 12. The glass tube 11 is provided, upstream and downstream of the catalyst sample 12, with A/F sensors (oxygen sensors) 15 and 16, respectively. Furthermore, a thermocouple 19 for temperature control is attached to the part of the glass tube 11 retaining the catalyst sample 12.

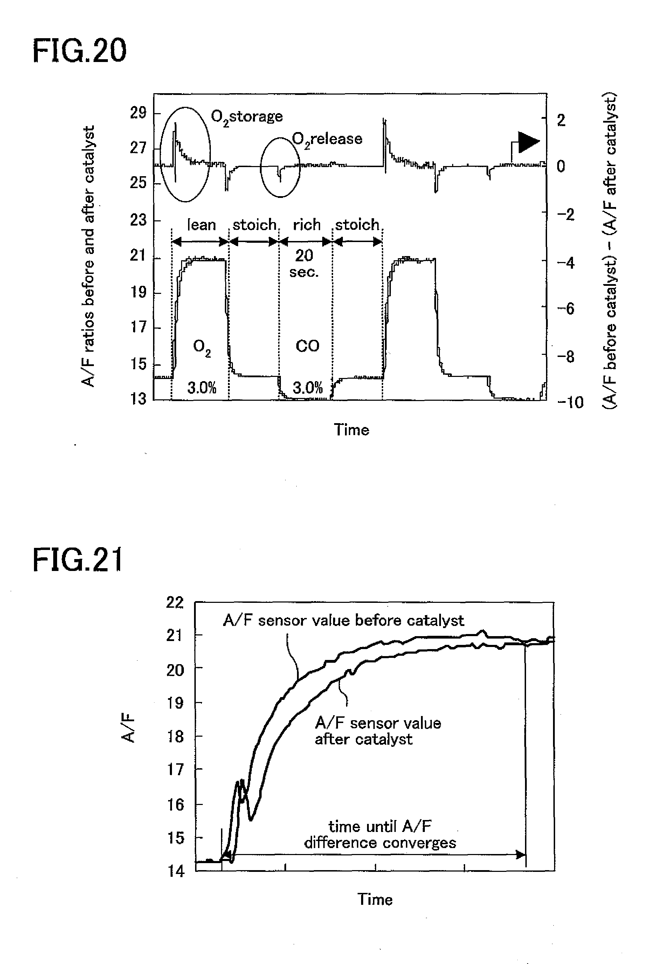

In measurement, with the temperature of the catalyst sample in the glass tube 11 kept at a predetermined value, a base gas N₂ continued to be supplied and exhausted through the exhaust part 18. During the supply of the base gas N₂, as shown in FIG. 20, O₂ pulses (each for 20 seconds) and CO pulses (each for 20 seconds) were alternately generated at 20 second intervals between each pulse. Thus, a cycle from lean to stoichiometric A/F ratio, then to rich A/F ratio, then to stoichiometric A/F ratio and back to lean A/F ratio was repeated. The amount of O₂ released from the catalyst sample (the oxygen storage/release amount) was determined by converting to the amount of O₂ the sum of the differences between the A/F ratio outputs of the A/F sensors 15 and 16 located before and after the catalyst sample ((the A/F ratio of the upstream A/F sensor 15) - (the A/F ratio of the downstream A/F sensor 16)) for a period of time from just after the switch from stoichiometric to rich A/F ratio until the difference between the A/F ratio outputs becomes zero as shown in FIG. 21. The amount of O₂ released was measured at various catalyst temperatures every 50°C from 200°C to 600°C.

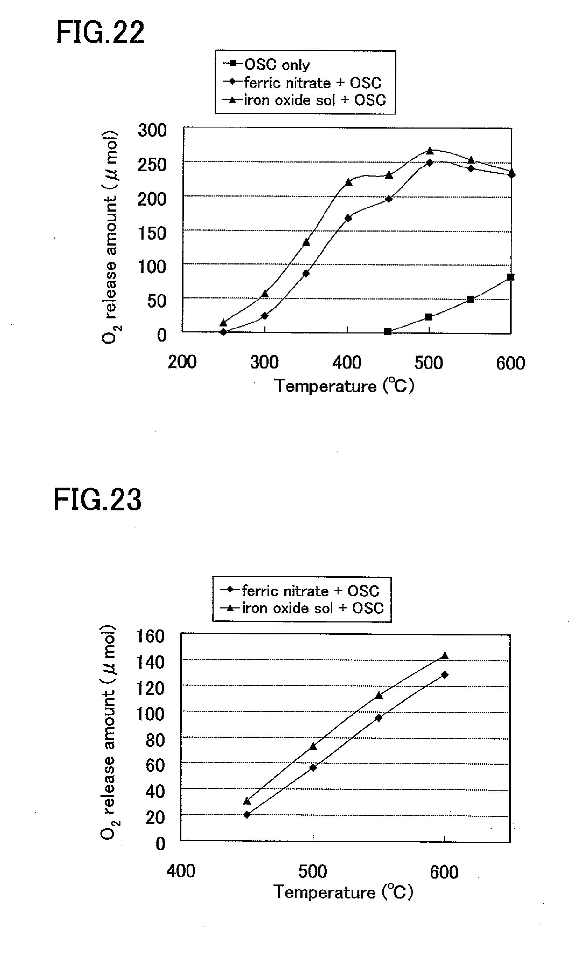

The measurement results are shown in FIG. 22. Both of Catalyst Sample A (iron oxide sol + OSC) and Catalyst Sample B (ferric nitrate + OSC) exhibited larger oxygen release amounts than Catalyst Sample C (OSC only) containing no iron oxide. A comparison between (iron oxide sol + OSC) and (ferric nitrate + OSC) shows that the former exhibited a larger oxygen release amount than the latter in the range from 250°C to 600°C.

FIG. 23 shows the results of the oxygen release amount measurement of the two catalyst samples, (iron oxide sol + OSC) and (ferric nitrate + OSC), after being aged (kept at 900°C for 24 hours in a nitrogen gas containing 2% oxygen and 10% water vapor). The figure shows that both the catalyst samples reduced their oxygen release amounts after the aging but the catalyst sample using the iron oxide sol exhibited a larger oxygen release amount than the other catalyst sample using ferric nitrate.

In Catalyst Sample A, a plurality of fine (300 nm or less in diameter) iron oxide particles derived from the iron oxide sol are dispersed on and in contact with each CeZrNd mixed oxide (OSC) particle (see FIGS. 2 to 5). Therefore, the iron oxide particles can be considered to effectively act to improve the oxygen storage/release capacity of the catalyst, coupled with the CeZrNd mixed oxide particle. On the other hand, Catalyst Sample B contains large-diameter iron oxide particles derived from ferric nitrate (see FIGS. 11 to 14). Therefore, the iron oxygen particles derived from ferric nitrate can be considered to have a smaller effect on the improvement in oxygen storage/release capacity than those derived from the iron oxide sol.

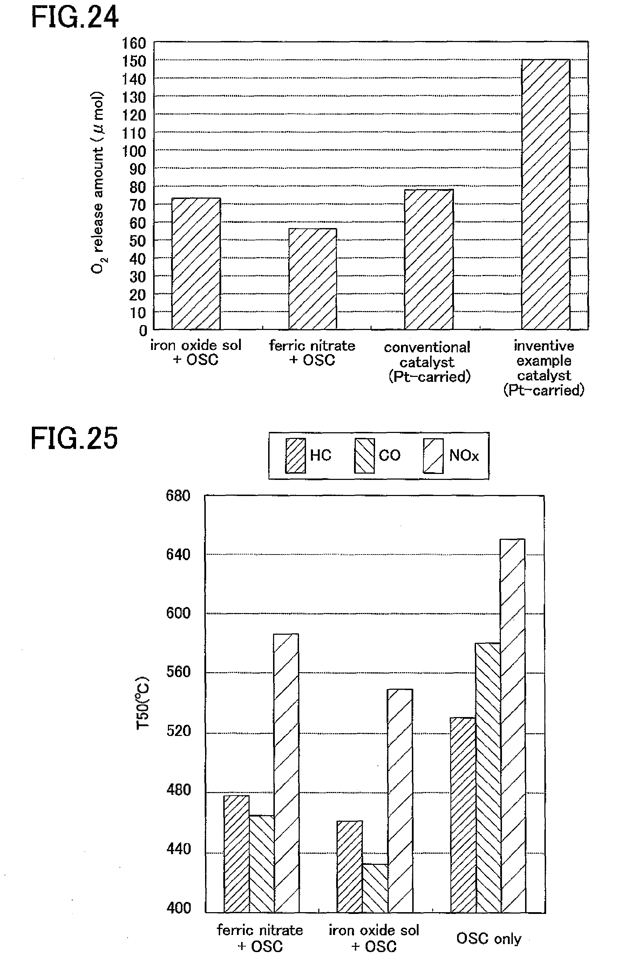

FIG. 24 is a graph showing the oxygen release amounts (at a measurement temperature of 500°C) of Catalyst Sample A (iron oxide sol + OSC) and Catalyst Sample B (ferric nitrate + OSC) both after subjected to the aging, together with the oxygen release amounts (at a measurement temperature of 500°C) of a conventional catalyst and an inventive example catalyst both after subjected to the same aging. The conventional catalyst is a catalyst obtained by carrying 1 g/L of Pt as a catalytic metal on the CeZrNd mixed oxide particles of Catalyst Sample C (OSC only). The inventive example catalyst is a catalyst obtained by carrying 1 g/L of Pt as a catalytic metal on the CeZrNd mixed oxide particles of Catalyst Sample A (iron oxide sol + OSC).

Catalyst Sample A (iron oxide sol + OSC) exhibited, in spite of no catalytic metal, Pt, carried on the CeZrNd mixed oxide particles, an oxygen release amount comparative with that of the conventional catalyst in which a catalytic metal, Pt, is carried on the CeZrNd mixed oxide particles. Furthermore, the inventive example catalyst in which a catalytic metal, Pt, is carried on the CeZrNd mixed oxide particles of Catalyst Sample A exhibited a significantly larger oxygen release amount than the conventional catalyst. These results show that iron oxide sol-derived iron oxide particles of very small diameter have a large effect on the enhancement of oxygen storage/release capacity.

### <EXHAUST GAS PURIFICATION PERFORMANCE>

A fresh catalyst (one not yet aged) and an aged catalyst (one kept at 900°C for 24 hours in a nitrogen gas containing 2% oxygen and 10% water vapor) of each of Catalyst Sample A (iron oxide sol + OSC), Catalyst Sample B (ferric nitrate + OSC) and Catalyst Sample C (OSC only) were preconditioned and then measured in terms of exhaust gas purification performance (light-off temperature T50 (°C) and changes in exhaust gas conversion efficiency with temperature) with a model exhaust gas flow reactor and an exhaust gas analyzer.

The preconditioning was carried out by increasing the temperature of a model exhaust gas at a rate of 30°C per minute from 100°C to 600°C while allowing the model exhaust gas to flow through the catalyst at a space velocity of 60000/h. The details of the model exhaust gas were as follows: While a mainstream gas was allowed to flow constantly at an A/F ratio of 14.7, a given amount of gas for changing the A/F ratio was added in pulses at a rate of 1 Hz to the mainstream gas to forcedly oscillate the A/F ratio within the range of ±0.9. The measurement of exhaust gas purification performance was made under the same conditions as in the preconditioning. The respective gas compositions at A/F ratios of 14.7, 13.8 and 15.6 are shown in TABLE 3.

**[TABLE 3]**

| A/F | 13.8 | 14.7 | 15.6 |
|---|---|---|---|
| C₃H₆ (ppm) | 541 | 555 | 548 |
| CO (%) | 2.35 | 0.60 | 0.59 |
| NO (ppm) | 975 | 1000 | 980 |
| CO₂ (%) | 13.55 | 13.90 | 13.73 |
| H₂ (%) | 0.85 | 0.20 | 0.20 |
| O₂ (%) | 0.58 | 0.60 | 1.85 |
| H₂O (%) | 10 | 10 | 10 |

### - LIGHT-OFF PERFORMANCE -

The light-off temperature T50 (°C) is the gas temperature at the catalyst entrance when the concentration of each exhaust gas component (HC, CO and NOx (nitrogen oxides)) detected downstream of the catalyst reaches half of that of the corresponding exhaust gas component flowing into the catalyst (when the conversion efficiency reaches 50%) after the temperature of the model exhaust gas is increased, and indicates the low-temperature catalytic conversion performance of the catalyst. The measurement results are shown in FIG. 25. Although in the figure the light-off temperature T50 of Catalyst Sample C (OSC only) for NOx conversion is 650°C, this is a value for convenience because the NOx conversion efficiency did not reach 50% even when the model gas temperature reached 600degree.

Both of Catalyst Sample A (iron oxide sol + OSC) and Catalyst Sample B (ferric nitrate + OSC) exhibited lower light-off temperatures T50 than Catalyst Sample C (OSC only). A comparison between Catalyst Sample A (iron oxide sol + OSC) and Catalyst Sample B (ferric nitrate + OSC) shows that the former exhibited lower light-off temperatures by a dozen degrees to approximately 40 degrees Celsius for all of HC, CO and NOx conversion than the latter.

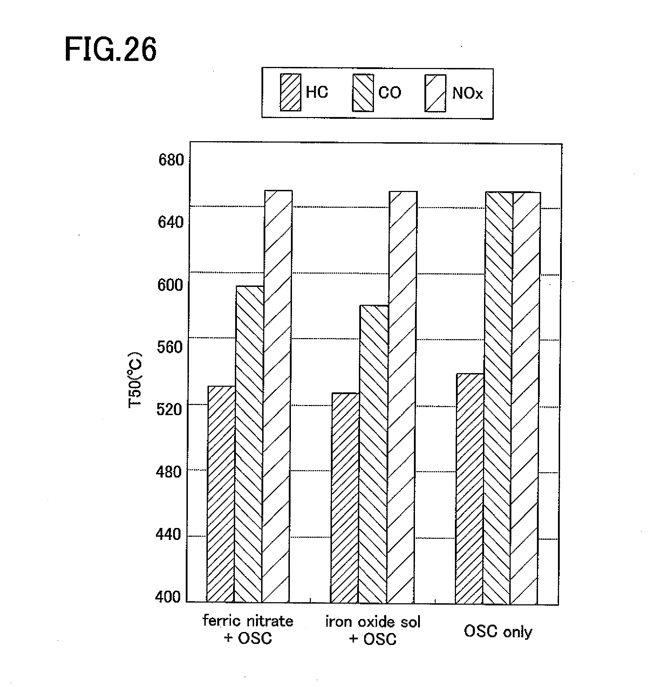

FIG. 26 shows the light-off temperatures T50 of the above three catalysts after being aged. Also after the aging, Catalyst Sample A (iron oxide sol + OSC) exhibited lower light-off temperatures T50 for HC and CO conversion than Catalyst Samples B and C. In the figure, each of light-off temperatures T50 of 650°C is a value for convenience because the conversion efficiency did not reach 50% even when the model gas temperature reached 600degree.

### - CHANGES IN GAS CONVERSION EFFICIENCY WITH TEMPERATURE -

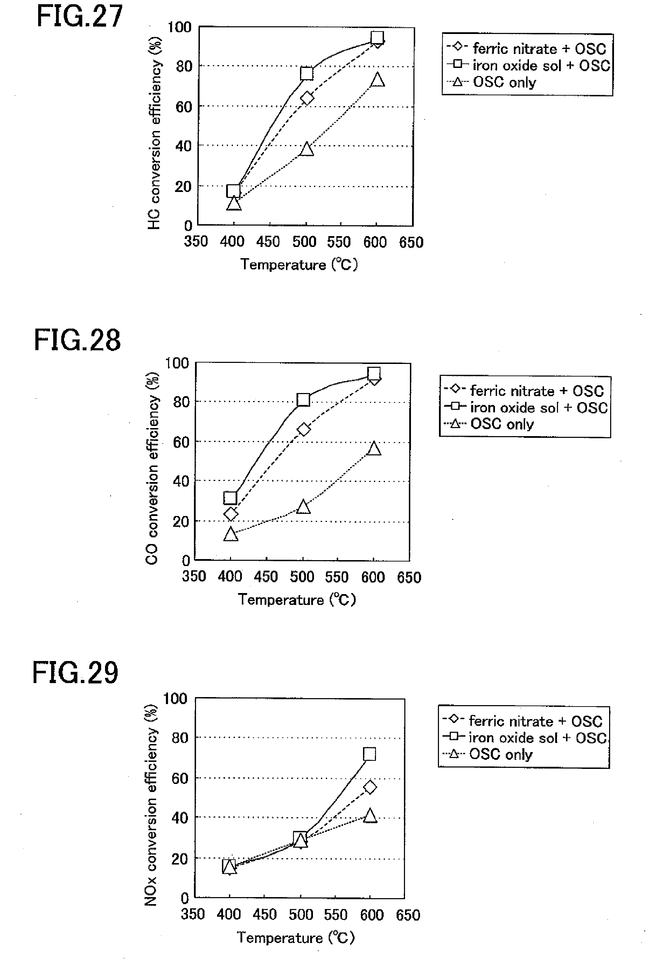

FIG. 27 shows changes with temperature in HC conversion efficiencies of the above three catalysts when being fresh. Both of Catalyst Sample A (iron oxide sol + OSC) and Catalyst Sample B (ferric nitrate + OSC) exhibited higher HC conversion efficiencies than Catalyst Sample C (OSC only). Furthermore, a comparison between Catalyst Sample A (iron oxide sol + OSC) and Catalyst Sample B (ferric nitrate + OSC) shows that the former exhibited a dozen percent higher HC conversion efficiency at 500°C that the latter and a slightly higher HC conversion efficiency also at 600°C than the latter.

FIG. 28 shows changes with temperature in CO conversion efficiencies of the above three catalysts when being fresh. Both of Catalyst Sample A (iron oxide sol + OSC) and Catalyst Sample B (ferric nitrate + OSC) exhibited higher CO conversion efficiencies than Catalyst Sample C (OSC only). Furthermore, a comparison between Catalyst Sample A (iron oxide sol + OSC) and Catalyst Sample B (ferric nitrate + OSC) shows that the former exhibited higher CO conversion efficiencies at all of 400°C, 500°C and 600°C than the latter, particularly a 15% higher CO conversion efficiency at 500°C than the latter.

FIG. 29 shows changes with temperature in NOx conversion efficiencies of the above three catalysts when being fresh. At 400°C and 500°C, the three catalysts exhibited substantially no difference in NOx conversion efficiency. At 600°C, Catalyst Sample B (ferric nitrate + OSC) exhibited a higher NOx conversion efficiency than Catalyst Sample C (OSC only) and Catalyst Sample A (iron oxide sol + OSC) exhibited a higher NOx conversion efficiency than Catalyst Sample B (ferric nitrate + OSC).

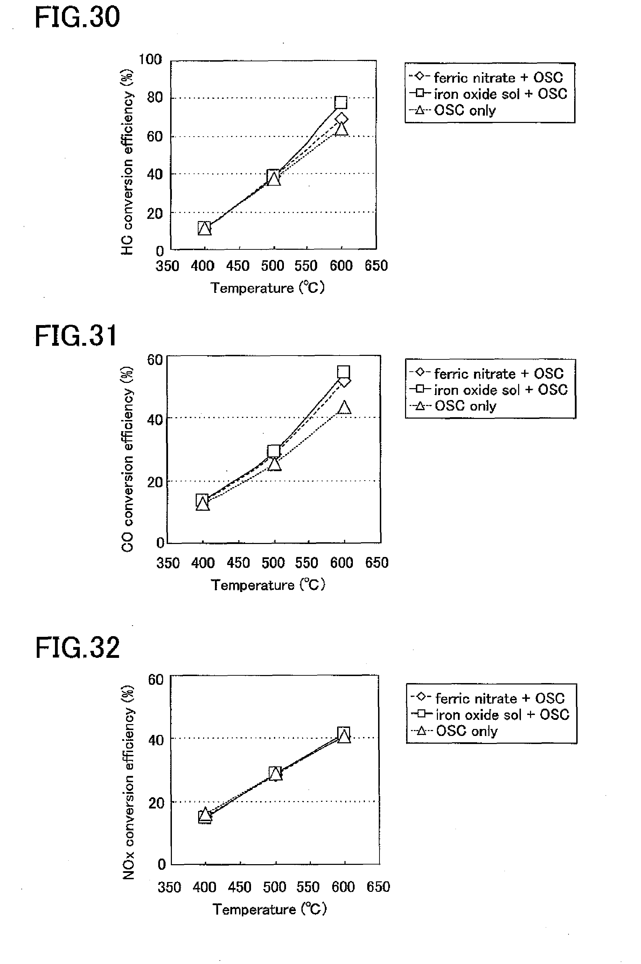

FIG. 30 shows changes with temperature in HC conversion efficiencies of the above three catalysts after being aged. At 400°C and 500°C, the three catalysts exhibited substantially no difference in HC conversion efficiency. At 600°C, Catalyst Sample B (ferric nitrate + OSC) exhibited a higher HC conversion efficiency than Catalyst Sample C (OSC only) and Catalyst Sample A (iron oxide sol + OSC) exhibited a higher HC conversion efficiency than Catalyst Sample B (ferric nitrate + OSC).

FIG. 31 shows changes with temperature in CO conversion efficiencies of the above three catalysts after being aged. At 400°C and 500°C, the three catalysts exhibited substantially no difference in CO conversion efficiency. At 600°C, Catalyst Sample B (ferric nitrate + OSC) exhibited a higher CO conversion efficiency than Catalyst Sample C (OSC only) and Catalyst Sample A (iron oxide sol + OSC) exhibited a higher CO conversion efficiency than Catalyst Sample B (ferric nitrate + OSC).

FIG. 32 shows changes with temperature in NOx conversion efficiencies of the above three catalysts after being aged. The three catalysts exhibited substantially no difference in NOx conversion efficiency.

The following can be seen from the above: If the catalyst contains iron oxide as in Catalyst Samples A and B, its exhaust gas purification performance is improved. Furthermore, if the iron oxide particles have a small diameter as in Catalyst Sample A, this increases the oxygen storage/release capacity and thereby largely enhances the exhaust gas purification performance and, particularly, significantly enhances the HC and CO conversion efficiencies.

### <EFFECTS OF AMOUNT OF FINE IRON OXIDE PARTICLES ON OXYGEN STORAGE/RELEASE CAPACITY AND CATALYTIC CONVERSION PERFORMANCE>

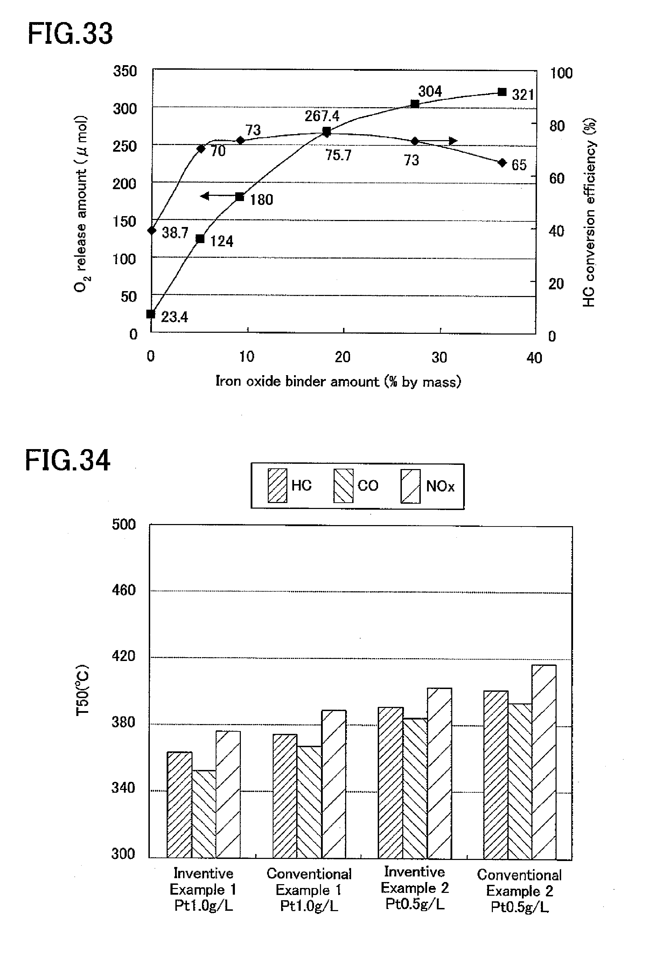

Catalyst Sample A (fresh catalyst) was examined in terms of how its oxygen release amount and HC conversion efficiency at 500°C were influenced by changes in amount of iron oxide sol-derived fine iron oxide particles carried on the support. The amount of CeZrNd mixed oxide carried on the support was fixed at 80 g/L, the amount of ZrO₂ binder-derived ZrO₂ carried on the support was fixed at 10 g/L and only the amount of iron oxide sol-derived fine iron oxide particles carried on the support was changed. The examination results are shown in FIG. 33. Note that in the figure the abscissa "Iron oxide binder amount" indicates the proportion of fine iron oxide particles in the catalyst layer.

FIG. 33 shows that when the proportion of fine iron oxide particles in the catalyst layer made of CeZrNd mixed oxide particles, ZrO₂ particles and iron oxide particles was 5% to 30% by mass, both inclusive (when the mass ratio of fine iron oxide particles to CeO₂ in the CeZrNd mixed oxide particles (iron oxide particles/CeO₂) was 25/100 to 210/100, both inclusive), the catalyst had an HC conversion efficiency of 70% or more and thereby exhibited an excellent exhaust gas purification performance.

### <EXHAUST GAS PURIFICATION PERFORMANCE OF CATALYST CONTAINING CATALYTIC METAL>

The following catalysts were prepared: a catalyst of Inventive Example 1 in which 1 g/L of Pt is carried as a catalytic metal on the CeZrNd mixed oxide particles of Catalyst Sample A (iron oxide sol + OSC); a catalyst of Inventive Example 2 in which 0.5 g/L of Pt is carried as a catalytic metal on the CeZrNd mixed oxide particles of Catalyst Sample A; a catalyst of Conventional Example 1 in which 1 g/L of Pt is carried as a catalytic metal on the CeZrNd mixed oxide particles of Catalyst Sample C (OSC only); and a catalyst of Conventional Example 2 in which 0.5 g/L of Pt is carried as a catalytic metal on the CeZrNd mixed oxide particles of Catalyst Sample C.

The catalysts of Inventive Examples 1 and 2 and Conventional Examples 1 and 2 were aged (kept at 900°C for 24 hours in a nitrogen gas containing 2% oxygen and 10% water vapor) and then measured in terms of exhaust gas purification performance (light-off temperature T50 (°C) and exhaust gas conversion efficiencies) under the same conditions as in the case of Catalyst Samples A to C.

FIG. 34 shows the light-off temperatures T50 for HC, CO and NOx conversion of the above catalysts. As is evident from comparison with the catalyst (iron oxide sol + OSC) and the catalyst (OSC only) both shown in FIG. 25 and having no Pt carried on their supports, the catalysts of Inventive and Conventional Examples exhibited approximately 200°C lower light-off temperatures owing to carriage of Pt on the CeZrNd mixed oxide particles. Furthermore, FIG. 34 shows that Inventive Examples 1 and 2 exhibited approximately 10°C lower light-off temperatures than the respective associated Conventional Examples 1 and 2 and that when iron oxide sol-derived fine iron oxide particles were dispersed in the catalyst layer, the exhaust gas purification performance was significantly increased.

TABLE 4 shows the HC, CO and NOx conversion efficiencies of the above examples at a gas temperature of 500°C at the entrance of each catalyst. As seen from the table, Inventive Examples 1 and 2 in which fine iron oxide sol-derived iron oxide particles were dispersed in the catalyst layer exhibited higher exhaust gas conversion efficiencies than Conventional Examples 1 and 2 containing no such fine iron oxide particles, and the difference in exhaust gas conversion efficiency due to the presence and absence of such fine iron oxide particles was significant particularly at a small amount of Pt carried on the support (0.5 g/L).

**[TABLE 4]**

| | Amount of Pt carried (g/L) | Exhaust gas conversion efficiency (%) | | |
|---|---|---|---|---|
| | | HC | CO | NOx |
| Inventive Example 1 | 1.0 | 98.6 | 97.8 | 100 |
| Conventional Example 1 | 1.0 | 95.9 | 95.2 | 99.2 |
| Inventive Example 2 | 0.5 | 93.5 | 93.4 | 96.1 |
| Conventional Example 2 | 0.5 | 85.1 | 84.6 | 87.1 |

### [LEAN NOx CATALYST (NOx STORAGE-REDUCTION CATALYST)]

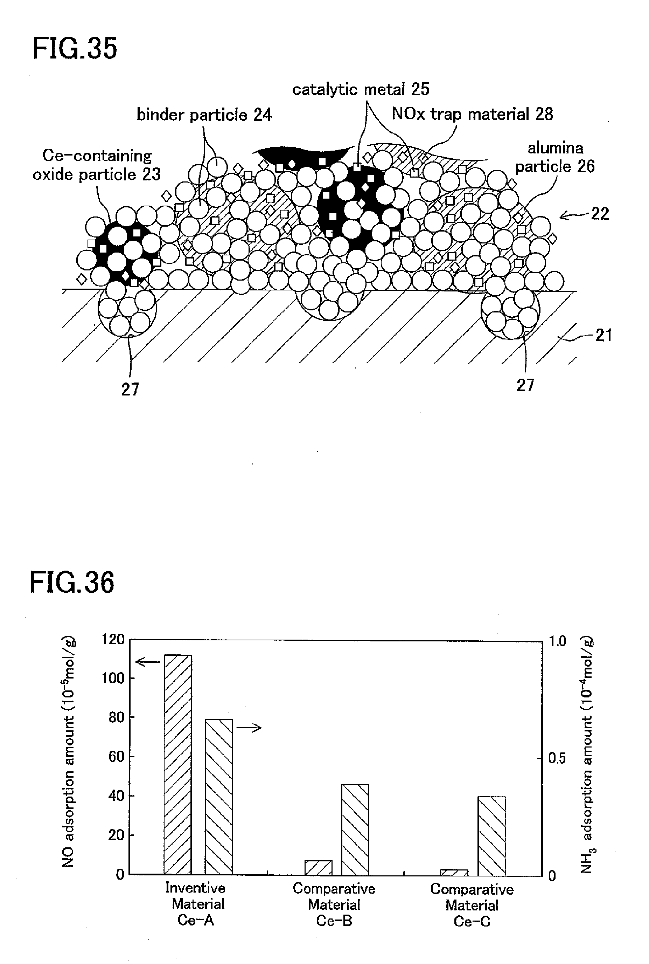

FIG. 35 schematically shows an example of a lean NOx catalyst (NOx storage-reduction catalyst) for converting NOx in exhaust gas of a vehicle. In this figure, reference numeral 21 denotes a cell wall of a honeycomb support made of an inorganic oxide and reference numeral 22 denotes a catalyst layer formed on the cell wall 21. The catalyst layer 22 contains Ce-containing oxide particles 23 having an oxygen storage/release capacity, binder particles 24, a catalytic metal 25 other than Fe, and, in the example shown in the figure, also alumina particles 26 and particles of a NOx trap material 28, both as promoter particles other than the Ce-containing oxide particles 23. The catalyst layer 22 may contain, in addition to the Ce-containing oxide particles 23 and the alumina particles 26, at least another kind of promoter particles, such as NOx storage material particles. The binder particles 24 are formed of metal oxide particles having a smaller mean diameter than the respective mean diameters of the Ce-containing oxide particles 23 and the alumina particles 26, and at least some of the binder particles 24 are formed of fine iron oxide particles having a diameter of 300 nm or less. In other words, the binder may be made of a combination of fine iron oxide particles and at least another kind of metal oxide particles.

The binder particles 24 containing the above fine iron oxide particles are dispersed approximately evenly throughout the catalyst layer 22 and interposed between the promoter particles (i.e., the Ce-containing oxide particles 23, the alumina particles 26 and the like) to bind the promoter particles. Therefore, at least some of the fine iron oxide particles are in contact with the Ce-containing oxide particles 23. In addition, the binder particles 24 fill in pores (five recesses and fine holes) 27 in the surface of the support cell wall 21 and retain the catalyst layer 22 on the cell wall 21 by their anchor effect. The catalytic metal 25 is carried on the promoter particles (the Ce-containing oxide particles 23, the alumina particles 26 and the like).

### <PREPARATION OF CATALYST>

Ferric nitrate is dissolved in ethanol at a rate of 40.4 g per 100 mL of ethanol and the product thus obtained is refluxed at 90°C to 100°C for two to three hours, thereby obtaining a liquid in slurry form, i.e., an iron oxide sol (a binder). Then, the Ce-containing oxide powder and other promoter materials are mixed and the mixture is then mixed with respective suitable amounts of iron oxide sol and ion-exchanged water to prepare a slurry. If necessary, another kind of binder is also added. The obtained slurry is coated on a support, followed by drying and calcination. The coated layer on the support is impregnated with a solution of catalytic metal and a solution of alkaline earth metal or the like serving as a NOx trap material, followed by drying and calcination. In the above manner, an exhaust gas purification catalyst (lean NOx catalyst) is obtained.

### <DIAMETER OF IRON OXIDE PARTICLE AND OXYGEN STORAGE/RELEASE CAPACITY>

The diameter of iron oxide particles derived from the iron oxide sol and the oxygen storage/release capacity of a catalyst prepared using the iron oxide sol have been previously described in the section "[THREE-WAY CATALYST]" with reference to FIGS. 2 to 25 and, therefore, a further description is not given here.

### <NO ADSORPTION CAPACITY AND NH₃ ADSORPTION CAPACITY>

Ce-containing oxide-based catalyst materials (Inventive Example Material Ce-A and Comparative Example Materials Ce-B and Ce-C) were prepared and evaluated in terms of NOx adsorption capacity and NH₃ adsorption capacity.

### - INVENTIVE EXAMPLE MATERIAL Ce-A -

The iron oxide sol and water were mixed with 40 g of Ce-Zr mixed oxide powder (having a CeO₂:ZrO₂ mass ratio of 90:10) and the mixture was dried by keeping it at 150°C for two hours and then calcined by keeping it at 500°C for two hours, thereby obtaining Inventive Example Material Ce-A. The amount of iron oxide sol mixed was controlled so that the amount of iron oxide obtained by calcination was 8 g.

### - COMPARATIVE EXAMPLE MATERIAL Ce-B -

Comparative Example Material Ce-B was prepared under the same conditions as Inventive Example Material Ce-A except that a solution of ferric nitrate was used instead of the iron oxide sol. The amount of solution of ferric nitrate was controlled so that the amount of ferric nitrate-derived iron oxide was 8 g, like Inventive Example Material Ce-A.

### - COMPARATIVE EXAMPLE MATERIAL Ce-C -

Comparative Example Material Ce-C was prepared under the same conditions as Inventive Example Material Ce-A except that an alumina sol was used instead of the iron oxide sol. The amount of Ce-Zr mixed oxide powder was 48 g, and the amount of alumina sol was controlled so that the amount of alumina derived from the alumina sol was 9.6 g.

### - MEASUREMENT OF NO ADSORPTION AMOUNT -

An amount of 0.5 g of each of the above catalyst materials, i.e., Inventive Example Material Ce-A and Comparative Example Materials Ce-B and Ce-C, was prepared. Each catalyst material was preconditioned and then measured in terms of NO adsorption amount with a gas flow reactor and a gas analyzer. The preconditioning was carried out by keeping the sample at 600°C for 10 minutes in a gas flow of He. Next, the temperature of a model gas (composed of 5000 ppm NO, 5% O₂ and balance He) was increased from a room temperature to 600°C while the model gas was allowed to flow through the catalyst material at a flow rate of 100 mL/ min. The amount of NO components adsorbed on the catalyst material during the flow of the model gas was calculated as an NO adsorption amount.

### - MEASUREMENT OF NH₃ ADSORPTION AMOUNT -

An amount of 0.5 g of each of the above catalyst materials, i.e., Inventive Example Material Ce-A and Comparative Example Materials Ce-B and Ce-C, was prepared. Each catalyst material was preconditioned and then measured in terms of NH₃ adsorption amount with a gas flow reactor and a gas analyzer, like the measurement of NO adsorption amount.

In measuring the NH₃ adsorption amount, a model gas (composed of 2% NH₃ and balance He) was first allowed to flow through the catalyst material at 100°C at a flow rate of 100 mL/min to adsorb NH₃ on the sample material. Next, instead of the model gas, a He gas containing no NH₃ was allowed to flow through the catalyst material and the gas temperature was increased at a rate of 10°C/min from 100°C to 600°C. The amount of NH₃ contained in the gas having passed through the sample material during the flow of the He gas was calculated as an NH₃ adsorption amount.

### - RESULTS -

The measurement results are shown in FIG. 36. As seen from the figure, Inventive Example Material Ce-A using the iron oxide sol exhibited a NO adsorption amount of 110 x 10⁻⁵ mol/g or more but Comparative Example Materials Ce-B and Ce-C exhibited extremely small NO adsorption amounts. Furthermore, Inventive Example Material Ce-A exhibited a larger NH₃ adsorption amount than Comparative Example Materials Ce-B and Ce-C. The reason for a significantly large NO adsorption amount of Inventive Example Material Ce-A can be considered to be that fine iron oxide particles derived from the iron oxide sol increased the basicity of the Ce-containing oxide. The reason for a large NH₃ adsorption amount of Inventive Example Material Ce-A is that fine iron oxide particles derived from the iron oxide sol were involved in the adsorption of NH₃.

The above results show that dispersion of iron oxide sol-derived fine iron oxide particles in the catalyst layer enhances the NOx conversion performance of the catalyst and, even if a large amount of NH₃ is produced by desorption and reduction of NOx stored in the catalyst, reduces the release of NH₃ into the atmosphere.

### <LEAN NOx CONVERSION PERFORMANCE>

The following lean NOx catalysts of Inventive Example 21 and Comparative Examples 21 and 22 were prepared, then aged and then evaluated in terms of lean NOx conversion efficiency, resistance to sulfur poisoning and performance of recovery from sulfur poisoning.

### - INVENTIVE EXAMPLE 21 -

Powdered γ-alumina and powdered Ce-Zr mixed oxide (having a CeO₂:ZrO₂ mass ratio of 75:25) were mixed, and further mixed with the iron oxide sol as a binder and ion-exchanged water, thereby preparing a slurry. The slurry was coated on a support, dried by keeping it at 150°C for two hours and then calcined by keeping it at 500°C for two hours in the atmosphere. Next, barium acetate and strontium acetate were dissolved in ion-exchanged water to prepare a solution and the solution was mixed with a solution of dinitro diammineplatinum nitrate and a solution of rhodium nitrate. The coated layer on the support was impregnated with the mixed solution, then dried by keeping it at 150°C for two hours and then calcined by keeping it at 500°C for two hours in the atmosphere, thereby obtaining a catalyst of Inventive Example 21.

Carried on the support of the catalyst were 120 g/L of gamma-alumina, 120 g/L of Ce-Zr mixed oxide, 30 g/L of barium (Ba), 3 g/L of strontium (Sr), 2 g/L of Pt, 0.3 g/L of Rh and 24 g/L of iron oxide sol-derived iron oxide. Note that the amount of each component carried on the support is the amount of the component per liter of the support after the calcination. Used as the support was a honeycomb support made of cordierite having a volume of 55 mL, a cell wall thickness of 4 mil (10.16 x 10⁻² mm) and 400 cells per square inch (645.16 mm²).

### - COMPARATIVE EXAMPLE 21 -

A catalyst of Comparative Example 21 was prepared under the same conditions as that of Inventive Example 21 except that a solution of ferric nitrate was used instead of the iron oxide sol. The amount of ferric nitrate-derived iron oxide carried on the support was 24 g/L.

### - COMPARATIVE EXAMPLE 22 -

A catalyst of Comparative Example 22 was prepared under the same conditions as that of Inventive Example 21 except that an alumina sol was used instead of the iron oxide sol. The amount of alumina sol-derived alumina carried on the support was 24 g/L.

### - EVALUATION OF LEAN NOx CONVERSION PERFORMANCE -

Each of the catalysts of Inventive Example 21 and Comparative Examples 21 and 22 was aged by keeping it in the atmospheric environment at 800°C for 20 hours and then examined in terms of lean NOx conversion performance with a model gas flow reactor and an exhaust gas analyzer. Specifically, a fuel-lean model exhaust gas (A/F = 22) was first allowed to flow through each catalyst for 60 seconds, and a fuel-rich model exhaust gas (A/F = 14.5) was then instead allowed to flow through the catalyst for 60 seconds. After this process was repeated several times, the catalyst was measured in terms of the NOx conversion efficiency for up to 60 seconds from the point in time when the composition of the model gas was switched from rich A/F to lean A/F (lean NOx conversion efficiency). The compositions of the fuel-lean model exhaust gas and fuel-rich model exhaust gas are as shown in TABLE 5. The space velocity was 35000/h.

**[TABLE 5]**

| | Lean | Rich |
|---|---|---|
| O₂ (%) | 10 | 0.50 |
| CO₂ (%) | 6 | 6 |
| CO (%) | 0.16 | 1 |
| HC (ppm) | 400 | 4000 |
| NO (ppm) | 260 | 260 |
| N₂ | balance | balance |

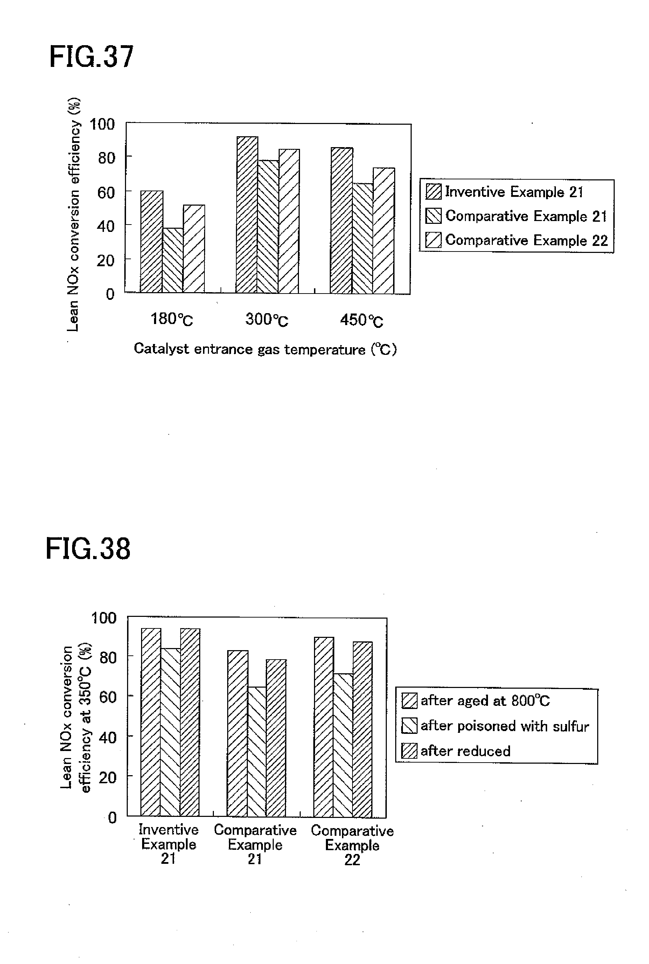

FIG. 37 shows the lean NOx conversion efficiencies at gas temperatures of 180°C, 300°C and 450°C at the catalyst entrances. As seen from the figure, Inventive Example 21 using the iron oxide sol as a binder exhibited higher NOx conversion efficiencies at all of 180°C, 300°C and 450°C than Comparative Examples 21 and 22. This shows that if iron oxide sol-derived fine iron oxide particles are dispersed in the catalyst layer, the NOx conversion efficiency can be increased over a wide temperature range from low to high temperatures. Comparative Example 21 contained iron oxide particles dispersed in the catalyst layer but had a poorer performance than Comparative Example 22 containing no iron oxide. The reason for this can be considered to be that since the iron oxide particles in Comparative Example 21 were derived from ferric nitrate and therefore had a large diameter, they could not enhance the oxygen storage/release capacity and NOx adsorption capacity of the Ce-Zr mixed oxide but rather degraded the performance thereof because of reduction in the specific surface area of the Ce-Zr mixed oxide.

### - RESISTANCE TO SULFUR POISONING AND PERFORMANCE OF RECOVERY FROM SULFUR POISONING -

Each of the catalysts of Inventive Example 21 and Comparative Examples 21 and 22 was subjected to the above aging, poisoning with sulfur and reduction (treatment of recovery from sulfur poisoning) in this order and measured in terms of the lean NOx conversion efficiency at a gas temperature of 350°C at the catalyst entrance each time after the aging, after the poisoning with sulfur and after the reduction.

The poisoning with sulfur was carried out as follows: While a gas of 100% N₂ was passed through each catalyst, the gas temperature was raised to 350°C and kept at 350°C. Then, instead of the N₂ gas, a gas for sulfur poisoning containing 100ppm SO₂, 10% O₂ and balance N₂ was passed through the catalyst at the same temperature and a space velocity of 35000/h for an hour. Next, instead of the gas for sulfur poisoning, a gas of 100% N₂ was passed through the catalyst again and the gas temperature was lowered to a room temperature. The reduction was carried out as follows: While a fuel-rich model exhaust gas corresponding to A/F = 14 was passed through each catalyst at a space velocity of 80000/h, the gas temperature was raised to 600°C at a rate of 30°C/min and kept at 600°C for 10 minutes. Then, instead of the model gas, a gas of 100% N₂ was passed through the catalyst and the gas temperature was lowered to a room temperature.

The measurement results are shown in FIG. 38. The results show that Inventive Example 21 exhibited a smaller degree of decrease in lean NOx conversion efficiency due to sulfur poisoning than Comparative Examples 21 and 22. The reason for this can be considered to be that iron oxide sol-derived fine iron oxide particles adsorbed a sulfur component, SO₂, to hinder the NOx trap material from being poisoned with sulfur. Furthermore, as seen form the figure, the lean NOx conversion efficiency of Inventive Example 21 was substantially fully recovered to the value before poisoned with sulfur by the reduction treatment. This shows that the catalyst can be used for a long period of time by appropriately subjecting it to reduction treatment.

### [ANOTHER EMBODIMENT OF THREE-WAY CATALYST]

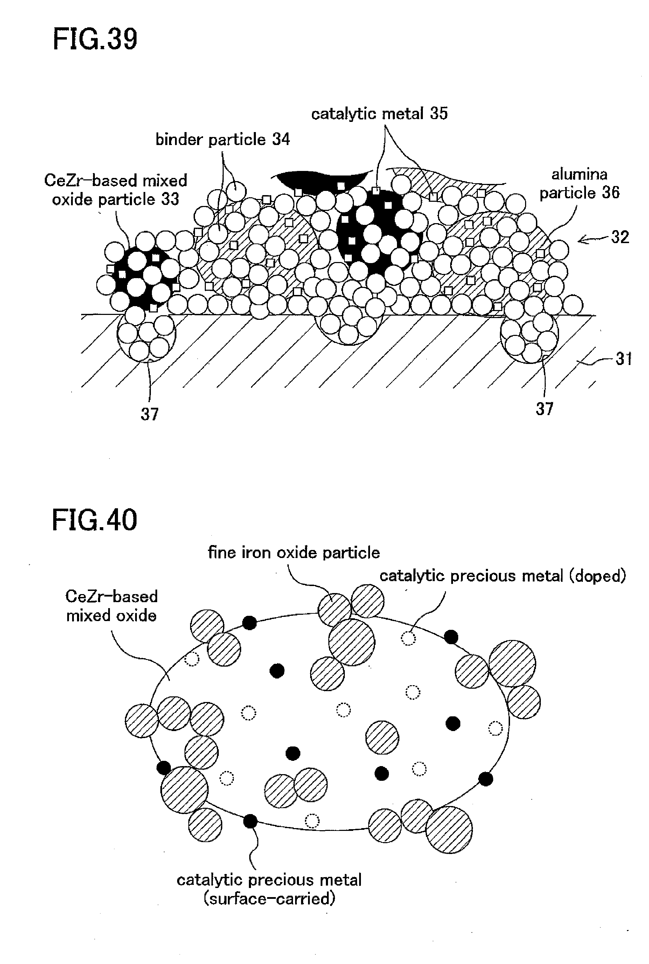

FIG. 39 schematically shows another embodiment of a three-way catalyst suitable for conversion of vehicle exhaust gas. In this figure, reference numeral 31 denotes a cell wall of a honeycomb support made of an inorganic oxide and reference numeral 32 denotes a catalyst layer formed on the cell wall 31. The catalyst layer 32 contains CeZr-based mixed oxide particles 33 having an oxygen storage/release capacity, binder particles 34, a catalytic metal 35 other than Fe, and, in the example shown in the figure, also alumina particles 36 as promoter particles other than the CeZr-based mixed oxide particles 33. The catalyst layer 32 may contain, in addition to the CeZr-based mixed oxide particles 33 and the alumina particles 36, at least another kind of promoter particles, such as HC adsorbing material particles or NOx storage material particles. The binder particles 34 are formed of metal oxide particles having a smaller mean diameter than the respective mean diameters of the CeZr-based mixed oxide particles 33 and the alumina particles 36, and at least some of the binder particles 34 are formed of fine iron oxide particles having a diameter of 300 nm or less. In other words, the binder may be made of a combination of fine iron oxide particles and at least another kind of metal oxide particles.

The binder particles 34 containing the above fine iron oxide particles are dispersed approximately evenly throughout the catalyst layer 32 and interposed between the promoter particles (i.e., the CeZr-based mixed oxide particles 33, the alumina particles 36 and the like) to bind the promoter particles. Therefore, at least some of the fine iron oxide particles are in contact with the CeZr-based mixed oxide particles 33. In addition, the binder particles 34 fill in pores (fine recesses and fine holes) 37 in the surface of the support cell wall 31 and retain the catalyst layer 32 on the cell wall 31 by their anchor effect. The catalytic metal 35 is carried on the promoter particles (the CeZr-based mixed oxide particles 33, the alumina particles 36 and the like).

FIG. 40 shows the relationship between the CeZr-based mixed oxide particle and the fine iron oxide particles. The CeZr-based mixed oxide particle is doped with catalytic precious metal and, in addition, catalytic precious metal of same kind is carried on the particle surface. Furthermore, the fine iron oxide particles having a diameter of 300 nm or less are in contact with the CeZr-based mixed oxide particle. Note that the term "doped" here means that catalytic precious metal particles are placed at or between crystal lattice points of a CeZr-based mixed oxide particle or at oxygen defect sites thereof.

### <PREPARATION OF CATALYST>

Ferric nitrate is dissolved in ethanol at a rate of 40.4 g per 100 mL of ethanol and the product thus obtained is refluxed at 90°C to 100°C for two to three hours, thereby obtaining a liquid in slurry form, i.e., an iron oxide sol (a binder). Then, CeZr-based mixed oxide powder is mixed with respective suitable amounts of iron oxide sol and ion-exchanged water to prepare a slurry. If necessary, another kind of binder is also added. The obtained slurry is coated on a support, followed by drying and calcination. The coated layer on the support is impregnated with a solution of catalytic metal, followed by drying and calcination. In the above manner, an exhaust gas purification catalyst is obtained.

At least another kind of promoter material, such as alumina powder, may be added to the slurry. The coated layer may be impregnated with, in addition to the solution of catalytic metal, a solution of alkaline earth metal, rare earth metal or the like serving as a NOx storage material so that the NOx storage material can be carried on the coated layer. Alternatively, the catalytic metal may be in advance carried on the support material, such as the CeZr-based mixed oxide particles.

### <DIAMETER OF IRON OXIDE PARTICLE AND OXYGEN STORAGE/RELEASE CAPACITY>

The diameter of iron oxide particles derived from the iron oxide sol and the oxygen storage/release capacity of a catalyst prepared using the iron oxide sol have been previously described in the section "[THREE-WAY CATALYST]" with reference to FIGS. 2 to 25 and, therefore, a further description is not given here.

### <EXHAUST GAS PURIFICATION PERFORMANCE>

Prepared were a plurality of kinds of CeZrNd mixed oxide powders containing different amounts of Rh doped as a catalytic precious metal therein and different amounts of Rh carried on the particle surfaces thereof. Then, various kinds of catalysts having different compounding ratios between the amount of CeZrNd mixed oxide particles and the amount of iron oxide sol-derived fine iron oxide particles were prepared and examined in terms of exhaust gas purification performance.

### - METHOD FOR PREPARING CATALYST SAMPLE -

Respective weighed amounts of zirconium oxynitrate solution, cerous nitrate solution, neodymium (III) nitrate hydrate solution and rhodium nitrate solution were mixed with water to prepare 300 mL of mixed solution in total. The mixed solution was stirred at room temperature for approximately an hour. The mixed solution was heated up to 80°C and then mixed with 50 mL of 28% aqueous ammonia. This mixture was implemented by dropping the mixed solution and the aqueous ammonia from their respective tubes into a cap of a high-speed disperser and mixing and stirring them with rotational and shearing forces from the disperser, and completed within one second. The water-turbid solution obtained by the mixture with the aqueous ammonia was allowed to stand for a day and night to produce a cake. The cake was subjected to centrifugation and then well rinsed in water. The water-rinsed cake was dried at approximately 150°C, then kept at approximately 400°C for about five hours, and then calcined by keeping it at approximately 500°C for two hours.

The mixed oxide thus obtained is a mixed oxide produced by doping Rh thereinto and has a structure in which Rh particles are placed at or between crystal lattice points of the mixed oxide or at oxygen defect sites thereof. Therefore, the mixed oxide is hereinafter referred to as a Rh-doped mixed oxide. The Rh-doped mixed oxide was prepared so that the composition except Rh had a CeO₂:ZeO₂:Nd₂O₃ mass ratio of 23:67:10.

Next, respective weighed amounts of ion-exchanged water and rhodium nitrate solution were added to a weighed amount of Rh-doped mixed oxide obtained in the above manner, followed by heating for removal of the solvent (evaporate to dryness). Then, the obtained product was dried and then calcined at 500°C for two hours, whereby Rh was carried on the surfaces of the Rh-doped mixed oxide particles. Upon each of preparation of the Rh-doped mixed oxide and later carriage of Rh on the surfaces of the Rh-doped mixed oxide particles, the amount of rhodium nitrate solution added was appropriately controlled to obtain various kinds of CeZrNd mixed oxide powders containing different amounts of Rh doped thereinto and different amounts of Rh carried on the particle surfaces.

The obtained CeZrNd mixed oxide powders were each mixed with an iron oxide sol and ion-exchanged water to prepare slurries. The slurries were coated on their respective honeycomb supports, dried and calcined, thereby obtaining various kinds of catalyst samples having different compounding ratios between the amount of CeZrNd mixed oxide particles and the amount of fine iron oxide particles.

Each catalyst sample was prepared so that the sum of the amount of Rh doped into the CeZrNd mixed oxide particles and the amount of Rh carried on the surfaces of the mixed oxide particles was 0.15 g per liter of the support. Used as the honeycomb support was a honeycomb support made of cordierite having a volume of 1 L, a cell wall thickness of 3.5 mil (8.89 x 10⁻² mm) and 600 cells per square inch (645.16 mm²).

### - EVALUATION OF EXHAUST GAS PURIFICATION PERFORMANCE -

The above catalyst samples were bench-aged. Specifically, the bench aging was implemented by operating an engine, with each catalyst sample mounted to an engine exhaust system, to repeat a cycle of (1) flow of exhaust gas having an A/F ratio of 14 for 15 seconds to (2) flow of exhaust gas having an A/F ratio of 17 for five seconds, then to (3) flow of exhaust gas having an A/F ratio of 14.7 for 40 seconds and then back to (1) until the elapse of a total time of 120 hours and to keep the gas temperature at the catalyst entrance at 900°C.

Then, a core sample was cut out in a support volume of 25 mL out of each catalyst sample and mounted to a model gas flow reactor and measured in terms of the light-off temperatures T50 (°C) for HC, CO and NOx conversion. The light-off temperature T50 (°C) is the gas temperature at the catalyst entrance when the catalyst reaches a gas component conversion efficiency of 50% after the temperature of the model gas flowing into the catalyst is gradually increased. The model gas had an A/F ratio of 14.7±0.9. Specifically, a mainstream gas was allowed to flow constantly at an A/F ratio of 14.7 and a specified amount of gas for changing the A/F ratio was added in pulses at a rate of 1 Hz, so that the A/F ratio was forcedly oscillated within the range of ±0.9. The space velocity SV was set at 60000/h and the rate of temperature increase was set at 30 °C /min.

The measurement results are shown in TABLEs 6-1 and 6-2. In these tables, "Evaporated Rh" indicates Rh carried on the surfaces of the mixed oxide particles, "Fe₂O₃" indicates fine iron oxide particles derived from the iron oxide sol, and "CZO" indicates the mixed oxide. Furthermore, "Evaporated Rh/Total Rh" indicates the proportion of the amount of Rh carried on the surfaces of the mixed oxide particles to the total amount of doped Rh and Rh carried on the particle surfaces.

**[TABLE 6-1]**

| | | Total Rh | Evaporated Rh | Evaporated Rh/Total Rh | Fe₂O₃ | CZO | Doped Rh |
|---|---|---|---|---|---|---|---|
| | | g/L | g/L | % by mass | g/L | g/L | g/L |
| Comparative | 31 | 0.15 | 0.05 | 33.33 | 2 | 240 | 0.1 |
| Inventive | 31 | 0.15 | 0.05 | 33.33 | 5 | 240 | 0.1 |
| Inventive | 32 | 0.15 | 0.05 | 33.33 | 25 | 240 | 0.1 |
| Inventive | 33 | 0.15 | 0.05 | 33.33 | 40 | 240 | 0.1 |
| Inventive | 34 | 0.15 | 0.05 | 33.33 | 5 | 50 | 0.1 |
| Inventive | 35 | 0.15 | 0.05 | 33.33 | | 120 | 0.1 |
| Inventive | 36 (the same as 31) | 0.15 | 0.05 | 33.33 | 5 | 240 | 0.1 |
| Comparative | 32 | 0.15 | 0.05 | 33.33 | 5 | 260 | 0.1 |
| Comparative | 33 | 0.15 | 0.05 | 33.33 | 40 | 20 | 0.1 |
| Inventive | 37 | 0.15 | 0.05 | 33.33 | 40 | 50 | 0.1 |
| Inventive | 38 | 0.15 | 0.05 | 33.33 | 40 | 120 | 0.1 |
| Inventive | 39 (the same as 33) | 0.15 | 0.05 | 33.33 | 40 | 240 | 0.1 |
| Comparative | 34 | 0.15 | 0.15 | 100.00 | 40 | 50 | 0 |
| Inventive | 310 | 0.15 | 0.147 | 98.00 | 40 | 50 | 0.003 |
| Inventive | 311 | 0.15 | 0.075 | 50.00 | 40 | 50 | 0.075 |
| Inventive | 312 | 0.15 | 0.02 | 13.33 | 40 | 50 | 0.13 |
| Inventive | 313 | 0.15 | 0.006 | 4.00 | 40 | 50 | 0.144 |
| Comparative | 35 | 0.15 | 0.003 | 2.00 | 40 | 50 | 0.147 |
| Comparative | 36 | 0.15 | 0.15 | 100.00 | 40 | 240 | 0 |
| Inventive | 314 | 0.15 | 0.147 | 98.00 | 40 | 240 | 0.003 |
| Inventive | 315 | 0.15 | 0.075 | 50.00 | 40 | 240 | 0.075 |
| Inventive | 316 | 0.15 | 0.02 | 13.33 | 40 | 240 | 0.13 |
| Inventive | 317 | 0.15 | 0.006 | 4.00 | 40 | 240 | 0.144 |
| Comparative | 37 | 0.15 | 0.003 | 2.00 | 40 | 240 | 0.147 |

**[TABLE 6-2]**

| | | Proportion | | Proportion | | Proportion | | T50 (°C) | | |
|---|---|---|---|---|---|---|---|---|---|---|
| | | Evaporated Rh | Fe₂O₃ | Fe₂O₃ | CZO | Doped Rh | CZO | HC | CO | NOx |
| Comparative | 31 | 2.44 | 97.56 | 0.83 | 99.17 | 0.04 | 99.96 | 295 | 289 | 283 |
| Inventive | 31 | 0.99 | 99.01 | 2.04 | 97.96 | 0.04 | 99.96 | 280 | 272 | 265 |
| Inventive | 32 | 0.20 | 99.80 | 9.43 | 90.57 | 0.04 | 99.96 | 275 | 267 | 262 |
| Inventive | 33 | 0.12 | 99.88 | 14.29 | 85.71 | 0.04 | 99.96 | 278 | 271 | 265 |
| Inventive | 34 | 0.99 | 99.01 | 9.09 | 90.91 | 0.20 | 99.80 | 275 | 270 | 265 |
| Inventive | 35 | 0.99 | 99.01 | 4.00 | 96.00 | 0.08 | 99.92 | 272 | 265 | 261 |
| Inventive | 36 (the same as 31) | 0.99 | 99.01 | 2.04 | 97.96 | 0.04 | 99.96 | 279 | 272 | 265 |
| Comparative | 32 | 0.99 | 99.01 | 1.89 | 98.11 | 0.04 | 99.96 | 292 | 285 | 282 |
| Comparative | 33 | 0.12 | 99.88 | 66.67 | 33.33 | 0.50 | 99.50 | 302 | 297 | 290 |
| Inventive | 37 | 0.12 | 99.88 | 44.44 | 55.56 | 0.20 | 99.80 | 270 | 274 | 270 |
| Inventive | 38 | 0.12 | 99.88 | 25.00 | 75.00 | 0.08 | 99.92 | 268 | 262 | 255 |
| Inventive | 39 (the same as 33) | 0.12 | 99.88 | 14.29 | 85.71 | 0.04 | 99.96 | 278 | 271 | 265 |
| Comparative | 34 | 0.37 | 99.63 | 44.44 | 55.56 | 0.00 | 100.00 | 288 | 284 | 279 |
| Inventive | 310 | 0.37 | 99.63 | 44.44 | 55.56 | 0.01 | 99.99 | 265 | 261 | 257 |
| Inventive | 311 | 0.19 | 99.81 | 44.44 | 55.56 | 0.15 | 99.85 | 262 | 257 | 253 |
| Inventive | 312 | 0.05 | 99.95 | 44.44 | 55.56 | 0.26 | 99.74 | 270 | 262 | 257 |
| Inventive | 313 | 0.01 | 99.99 | 44.44 | 55.56 | 0.29 | 99.71 | 280 | 270 | 265 |
| Comparative | 35 | 0.01 | 99.99 | 44.44 | 55.56 | 0.29 | 99.71 | 292 | 285 | 280 |
| Comparative | 36 | 0.37 | 99.63 | 14.29 | 85.71 | 0.00 | 100.00 | 293 | 287 | 281 |
| Inventive | 314 | 0.37 | 99.63 | 14.29 | 85.71 | < 0.01 | > 99.9 | 258 | 253 | 249 |
| Inventive | 315 | 0.19 | 99.81 | 14.29 | 85.71 | 0.03 | 99.97 | 254 | 248 | 242 |
| Inventive | 316 | 0.05 | 99.95 | 14.29 | 85.71 | 0.05 | 99.95 | 262 | 256 | 252 |
| Inventive | 317 | 0.01 | 99.99 | 14.29 | 85.71 | 0.06 | 99.94 | 272 | 265 | 260 |
| Comparative | 37 | 0.01 | 99.99 | 14.29 | 85.71 | 0.06 | 99.94 | 288 | 280 | 275 |

Comparative Examples 31 to 33 and Inventive Examples 31 to 39 are the cases where they had a proportion of Evaporated Rh/Total Rh of 33.33% by mass and different proportions of the amount of fine iron oxide particles to the total amount of fine iron oxide particles and CeZr-based mixed oxide particles (see the columns relating to the proportion between "Fe₂O₃" and "CZO" in TABLE 6-2). Reference to the tables shows that if the proportion of fine iron oxide particles was 2% to 45% by mass, both inclusive, the catalyst had a light-off temperature T50 of not higher than 280°C and thereby exhibited an excellent light-off performance.

Comparative Examples 34 and 35 and Inventive Examples 310 to 313 are the cases where their proportion of fine iron oxide particles was fixed at 44.44% by mass and their proportion of Evaporated Rh/Total Rh was changed. The tables shows that if the proportion of Evaporated Rh/Total Rh was more than 2% and not more than 98% by mass, the catalyst had a light-off temperature T50 of not higher than 280°C and thereby had an excellent light-off performance. Comparative Examples 36 and 37 and Inventive Examples 314 to 317 are the cases where their proportion of fine iron oxide particles was fixed at 14.29% by mass and their proportion of Evaporated Rh/Total Rh was changed. Also in these case, if the proportion of Evaporated Rh/Total Rh was more than 2% and not more than 98% by mass, the catalyst had a light-off temperature T50 of not higher than 280°C.

Inventive Examples 31 to 39 and 310 to 317 had a total amount of Rh of 0.15 g/L. Therefore, according to the present invention, an excellent exhaust gas purification performance can be obtained with a small amount of catalytic precious metal. The total amount of catalytic precious metal is preferably 0.1 to 3 g/L, both inclusive.

### [OXIDATION CATALYST]

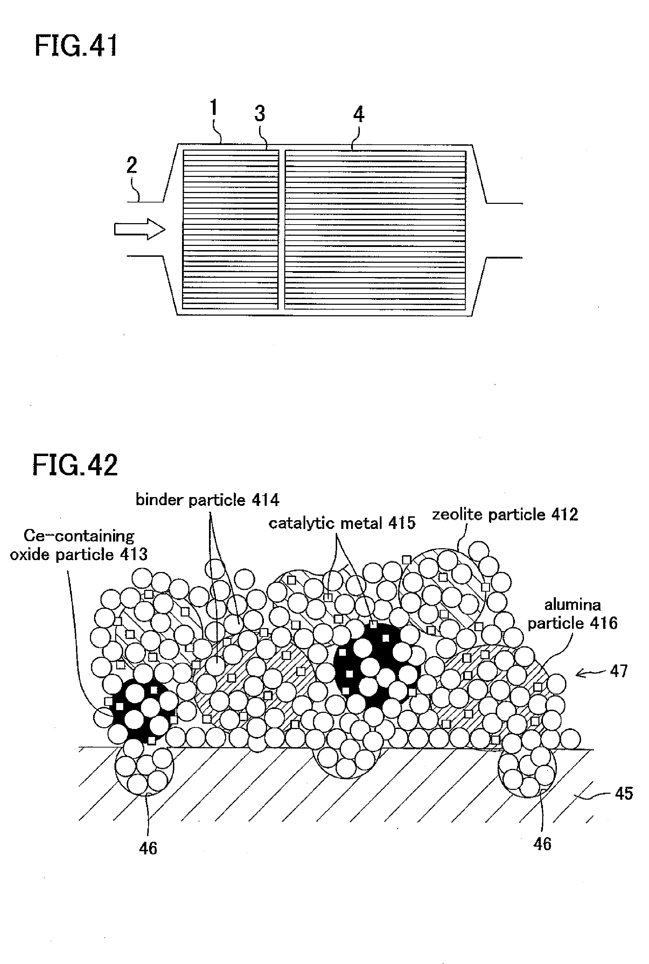

In FIG. 41, reference numeral 41 denotes a converter vessel disposed in an exhaust gas passage 42 of an engine. The converter vessel 41 contains an oxidation catalyst (exhaust gas purification catalyst) 43 and a particulate filter (hereinafter referred to simply as a "filter") 44. The oxidation catalyst 43 is disposed upstream of the filter 44 in the flow direction of exhaust gas.

FIG. 42 schematically shows the oxidation catalyst 43. In this figure, reference numeral 45 denotes a cell wall of a honeycomb support made of an inorganic oxide and reference numeral 47 denotes a catalyst layer formed on the cell wall 45. The catalyst layer 47 contains zeolite particles 412, Ce-containing oxide particles 413 having an oxygen storage/release capacity, binder particles 414, a catalytic metal (Pt) 415 other than Fe, and alumina particles 416. The catalyst layer 47 may contain at least another kind of promoter particles. The binder particles 414 are formed of metal oxide particles having a mean diameter smaller than the respective mean diameters of the zeolite particles 412, the Ce-containing oxide particles 413 and the alumina particles 416 and as small as 300 nm or less. Some of the binder particles 414 may be formed of fine iron oxide particles and the rest formed of oxide particles of at least one kind of metal selected from transition metals and rare earth metals.

The fine iron oxide particles 414 serving as binder particles are dispersed approximately evenly throughout the catalyst layer 47 and interposed between the promoter particles (i.e., the zeolite particles 412, the Ce-containing oxide particles 413, the alumina particles 416 and the like) to bind the promoter particles. Therefore, at least some of the fine iron oxide particles 414 are in contact with the zeolite particles 412, the Ce-containing oxide particles 413 and the alumina particles 416. In addition, the fine iron oxide particles 414 fill in pores (fine recesses and fine holes) 46 in the surface of the support cell wall 45 and retain the catalyst layer 47 on the cell wall 45 by their anchor effect. The catalytic metal 415 is carried on the promoter particles (the zeolite particles 412, the Ce-containing oxide particles 413, the alumina particles 416 and the like). <PREPARATION OF OXIDATION CATALYST>

Zeolite powder, Ce-containing oxide powder and alumina powder are mixed together and then mixed with a catalytic metal solution, followed by evaporation to dryness. The product thus obtained is then dried and calcined to prepare catalyst powder. Meanwhile, ferric nitrate is dissolved in ethanol at a rate of 40.4 g per 100 mL of ethanol and the product thus obtained is refluxed at 90°C to 100°C for two to three hours, thereby obtaining a liquid in slurry form, i.e., an iron oxide sol (a binder). Then, the catalyst powder is mixed with respective suitable amounts of iron oxide sol and ion-exchanged water to prepare a slurry. Another kind of binder may be added to the slurry. The obtained slurry is coated on a support, followed by drying and calcination. In the above manner, an oxidation catalyst is obtained.

At least another kind of promoter material may be added to the slurry. Alternatively, zeolite powder, Ce-containing oxide powder and alumina powder may be mixed together and then mixed with respective suitable amounts of iron oxide sol and ion-exchanged water to prepare a slurry. In this case, the slurry is coated on a support, the coated layer is dried and calcined, then impregnated with a catalytic metal solution, and then dried and calcined again.

### <DIAMETER OF IRON OXIDE PARTICLE AND OXYGEN STORAGE/RELEASE CAPACITY>

The diameter of iron oxide particles derived from the iron oxide sol and the oxygen storage/release capacity of a catalyst prepared using the iron oxide sol have been previously described in the section "[THREE-WAY CATALYST]" with reference to FIGS. 2 to 25 and, therefore, a further description is not given here.

### <EXHAUST GAS PURIFICATION PERFORMANCE>

Catalysts of Inventive Example 41 and Comparative Examples 41 and 42 were prepared and evaluated in terms of exhaust gas purification performance.

### - INVENTIVE EXAMPLE 41 -

CeZrNd mixed oxide powder, β-zeolite powder and La-containing alumina powder (containing 5% by mass La₂O₃) were mixed together and then mixed with a solution of dinitro diammineplatinum nitrate and ion-exchanged water. The mixture was evaporated to dryness, well dried and then calcined by keeping it at 500°C for two hours in the atmosphere. The obtained catalyst powder was mixed with the iron oxide sol serving as a binder and ion-exchanged water to prepare a slurry. The slurry was coated on a support, dried at 150°C and calcined by keeping it at 500°C for two hours in the atmosphere.

Carried on the support of the catalyst were 40 g/L of CeZrNd mixed oxide, 100 g/L of β-zeolite, 60 g/L of La-containing alumina, 20 g/L of iron oxide sol-derived iron oxide and 3 g/L of Pt. Note that the amount of each component carried on the support is the amount of the component per liter of the support after the calcination. Used as the support was a honeycomb support made of cordierite having a volume of 25 mL, a cell wall thickness of 3.5 mil (8.89 x 10⁻² mm) and 600 cells per square inch (645.16 mm²).

### - COMPARATIVE EXAMPLE 41 -

A catalyst of Comparative Example 41 was prepared under the same conditions as that of Inventive Example 41 except that a solution of ferric nitrate was used instead of the iron oxide sol. The amount of ferric nitrate-derived iron oxide carried on the support was 20 g/L.

### - COMPARATIVE EXAMPLE 42 -

A catalyst of Comparative Example 42 was prepared under the same conditions as that of Inventive Example 41 except that an alumina sol was used instead of the iron oxide sol. The amount of alumina sol-derived alumina carried on the support was 20 g/L.

### - EVALUATION OF EXHAUST GAS PURIFICATION PERFORMANCE -

Each of the catalysts of Inventive Example 41 and Comparative Examples 41 and 42 was aged by keeping it at 700°C for 52 hours in the atmosphere and then measured in terms of the light-off temperatures T50 for HC and CO conversion with a model exhaust gas flow reactor and an exhaust gas analyzer. The model exhaust gas was composed of 200 ppmC HC, 400 ppm CO, 500 ppm NO and balance N₂. The space velocity SV was set at 50000/h and the rate of increase of gas temperature at the catalyst entrance was set at 30°C /min.

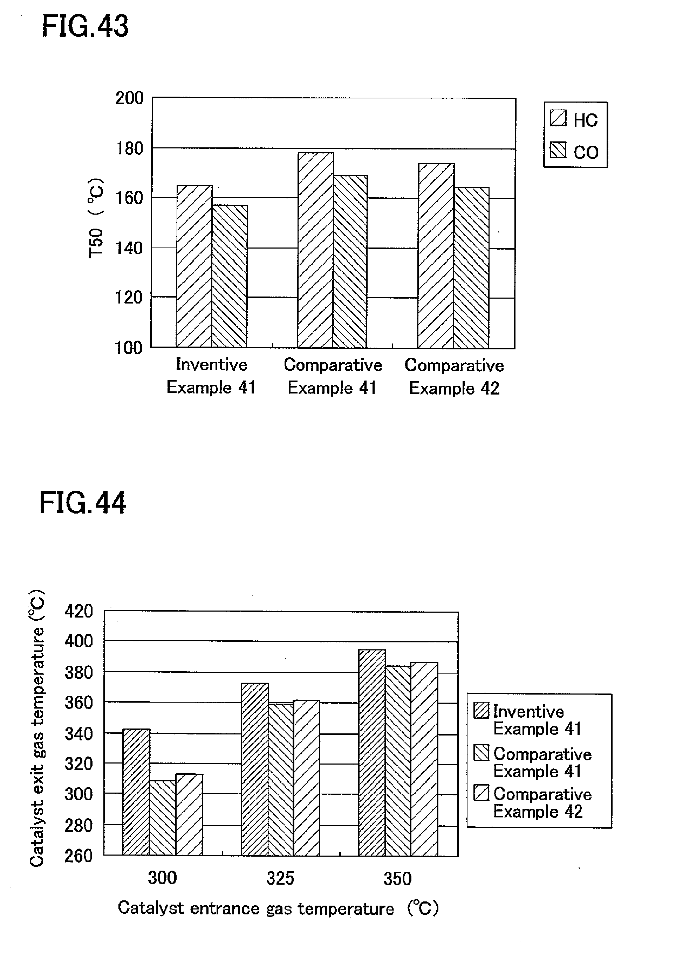

The measurement results are shown in FIG. 43. The figure shows that Inventive Example 41 exhibited particularly lower light-off temperatures T50 for HC and CO conversion than Comparative Examples 41 and 42 and that when fine iron oxide particles were dispersed in the catalyst layer by using the iron oxide sol as a binder, the exhaust gas purification performance was enhanced. Furthermore, although Comparative Example 41 contained iron oxide in the catalyst layer like Inventive Example 41, it exhibited a higher light-off temperature T50 than Comparative Example 42 containing no iron oxide. This can be believed to be due to that the catalytic activity was decreased for the following reasons: The iron oxide particles in Comparative Example 41 were derived from ferric nitrate and therefore had a large diameter and, in addition, Pt particles serving as a catalytic metal were engulfed by the cohering and growing iron oxide particles in the process of calcination and aging. Furthermore, it can be inferred that when ferric nitrate having entered the pores in the β-zolite particles cohered and grew in the form of iron oxide particles, part of the zeolite crystal structure broke.

### <EXHAUST GAS TEMPERATURE RISE PERFORMANCE>

The catalysts of Inventive Example 41 and Comparative Examples 41 and 42 were evaluated in terms of their performances of how much they increase the temperature of exhaust gas flowing into the particulate filter. Specifically, in consideration of post injection, the model exhaust gas was selected to have an HC concentration 20 times as high as that in the evaluation of the light-off temperature (i.e., to have a composition of 4000 ppmC HC, 400 ppm CO, 500 ppm NO and balance N₂). The space velocity SV was set at 50000/h. The gas temperature at the catalyst exit was measured at each of gas temperatures of 300°C, 325°C and 350°C at the catalyst entrance.

The measurement results are shown in FIG. 44. Reference to FIG. 44 shows that Inventive Example 41 exhibited a temperature rise of approximately 40°C to 50°C, while Comparative Examples 41 and 42 exhibited a temperature rise of approximately 35°C at maximum. Particularly, at a gas temperature of 300°C at the catalyst entrance, a significant difference in the amount of temperature rise was found between Inventive Example 41 and each of Comparative Examples 41 and 42. It can be said from the above that, according to Inventive Example 41, even if the exhaust gas temperature is low, the temperature of exhaust gas flowing into the particulate filter can be rapidly increased owing to post injection.

### <EFFECTS OF AMOUNT OF IRON OXIDE ON EXHAUST GAS PURIFICATION PERFORMANCE>

Catalysts of Inventive Examples 42 to 45 were examined in terms of how changes in amount of iron oxide sol-derived iron oxide carried on the support have an effect on the light-off temperature T50 for HC conversion. Specifically, catalysts of Inventive Examples 42, 43, 44 and 45 were prepared so that their respective supports carried 10 g/L of iron oxide sol-derived iron oxide, 40 g/L of iron oxide sol-derived iron oxide, 50 g/L of iron oxide sol-derived iron oxide, and 20 g/L of iron oxide sol-derived iron oxide as well as 10 g/L of alumina sol-derived alumina. The catalyst of Inventive Example 45 used two kinds of binders.

The other catalyst components carried on the support in each of Inventive Examples 42 to 45 were the same as those in Inventive Example 41, that is, 40 g/L of CeZrNd mixed oxide, 100 g/L of β-zeolite and 60 g/L of La-containing alumina. Catalysts of Inventive Examples 42 to 45 thus obtained were measured in terms of light-off temperature T50 for HC conversion according to the previously-described method for evaluating the exhaust gas purification performance.

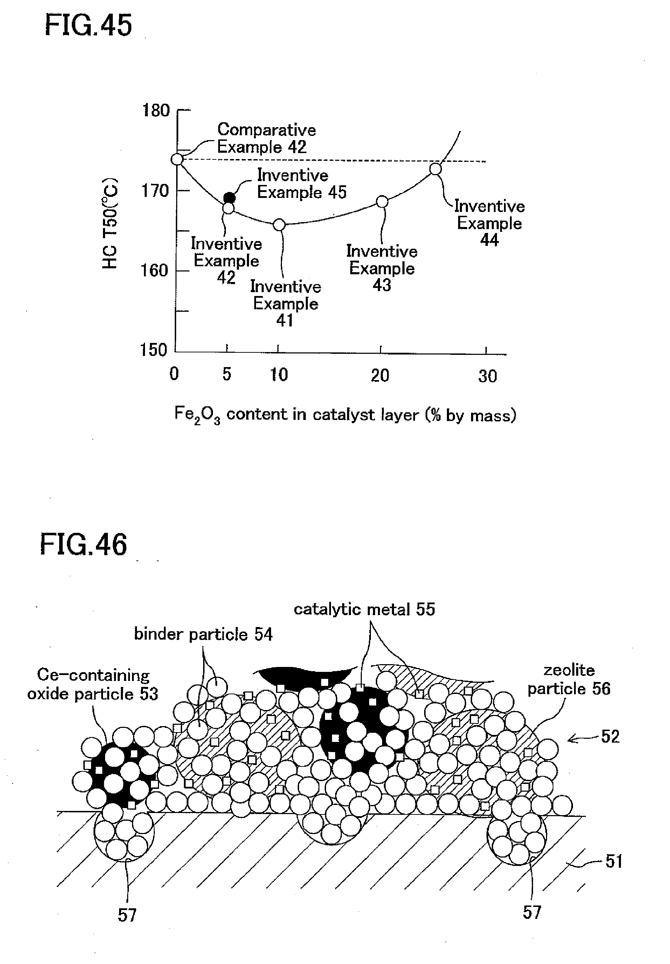

The measurement results are shown in FIG. 45, together with the measurement results of Inventive Example 41 and Comparative Example 42. In the figure, the amount of iron oxide sol-derived iron oxide carried on the support is converted to the proportion of the amount of iron oxide carried on the support to the total amount (200 g/L) of CeZrNd mixed oxide, β-zeolite and La-containing alumina all carried on the support, and expressed as "Fe₂O₃ content in catalyst layer" in the abscissa.

The figure shows that if the Fe₂O₃ content was 25% by mass or less and iron oxide sol-derived fine iron oxide particles were dispersed in the catalyst layer, the exhaust gas purification performance was enhanced. Furthermore, the figure shows that the Fe₂O₃ content is preferably 5% to 20% by mass, both inclusive.

As can be seen from the above, the oxidation catalyst is suitably used for lean-burn engines, such as diesel engines or lean-burn gasoline engines in which a gasoline-based fuel is burnt under fuel-lean conditions, and is also applicable to lean-burn engines that use a hydrogen fuel containing an HC component or a mixed fuel of hydrogen and gasoline or the like.

### [DE-NOx SCR CATALYST]

FIG. 46 schematically shows a NOx SCR catalyst for selectively reducing NOx in exhaust gas with a reducer supplied in an oxygen-rich atmosphere. In this figure, reference numeral 51 denotes a cell wall of a honeycomb support made of an inorganic oxide and reference numeral 52 denotes a catalyst layer formed on the cell wall 51. The catalyst layer 52 contains Ce-containing oxide particles 53 having a NOx adsorption capacity, binder particles 54, a catalytic metal 55 selectively reducing Nox of exhasut gas with NH₃ in an oxygen-rich atomospher, and zeolite particles 56. Preferably, the catalytic metal 55 is made of a transision metal except Pt, Pd, Rh, and Fe. The catalyst layer 52 may contain, in addition to the Ce-containing oxide particles 53 and the zeolite particles 56, at least another kind of promoter particles. The binder particles 54 are formed of metal oxide particles having a mean diameter smaller than the respective mean diameters of the Ce-containing oxide particles 53 and the zeolite particles 56 and as small as 300 nm or less. Some of the binder particles 54 may be formed of fine iron oxide particles and the rest formed of oxide particles of at least one kind of metal selected from transition metals and rare earth metals.

The binder particles 54 containing the above fine iron oxide particles are dispersed approximately evenly throughout the catalyst layer 52 and interposed between the promoter particles (i.e., the Ce-containing oxide particles 53, the zeolite particles 56 and the like) to bind the promoter particles. Therefore, at least some of the fine iron oxide particles are in contact with the Ce-containing oxide particles 53 and the zeolite particles 56. In addition, the binder particles 54 fill in pores (fine recesses and fine holes) 57 in the surface of the support cell wall 51 and retain the catalyst layer 52 on the cell wall 51 by their anchor effect. The catalytic metal 55 is carried on the promoter particles (the Ce-containing oxide particles 53, the zeolite particles 56 and the like).

### <PREPARATION OF CATALYST>

Ferric nitrate is dissolved in ethanol at a rate of 40.4 g per 100 mL of ethanol and the product thus obtained is refluxed at 90°C to 100°C for two to three hours, thereby obtaining a liquid in slurry form, i.e., an iron oxide sol (a binder). Then, Ce-containing oxide powder, zeolite powder and a catalytic metal component are mixed and the mixture is then mixed with respective suitable amounts of iron oxide sol and ion-exchanged water to prepare a slurry. If necessary, another kind of promoter powder and/or another kind of binder is also added. The obtained slurry is coated on a support, followed by drying and calcination. In the above manner, an exhaust gas purification catalyst is obtained.

### <DIAMETER OF IRON OXIDE PARTICLE AND OXYGEN STORAGE/RELEASE CAPACITY>

The diameter of iron oxide particles derived from the iron oxide sol and the oxygen storage/release capacity of a catalyst prepared using the iron oxide sol have been previously described in the section "[THREE-WAY CATALYST]" with reference to FIGS. 2 to 25 and, therefore, a further description is not given here.

### <NO ADSORPTION CAPACITY AND NH₃ ADSORPTION CAPACITY>

Zeolite-based catalyst materials (Inventive Example Material Z-A and Comparative Example Materials Z-B and Z-C) were prepared and evaluated in terms of NOx adsorption capacity and NH₃ adsorption capacity.

### - INVENTIVE EXAMPLE MATERIAL Z-A -

The iron oxide sol and water were mixed with 40 g of zeolite (made by Zeolyst International Criterion & Technologies and having an SiO₂/Al₂O₃ ratio of 40) and the mixture was dried by keeping it at 150°C for two hours and then calcined by keeping it at 500°C for two hours, thereby obtaining Inventive Example Material Z-A. The amount of iron oxide sol mixed was controlled so that the amount of iron oxide obtained by calcination was 10 g.

### - COMPARATIVE EXAMPLE MATERIAL Z-B -

Comparative Example Material Z-B was prepared under the same conditions as Inventive Example Material Z-A except that a solution of ferric nitrate was used instead of the iron oxide sol. The amount of solution of ferric nitrate was controlled so that the amount of ferric nitrate-derived iron oxide was 10 g, like Inventive Example Material Z-A.

### - COMPARATIVE EXAMPLE MATERIAL Z-C -

Comparative Example Material Z-C was prepared under the same conditions as Inventive Example Material Z-A except that an alumina sol was used instead of the iron oxide sol. The amount of alumina sol was controlled so that the amount of alumina derived from the alumina sol was 10 g.

### - MEASUREMENT OF NO ADSORPTION AMOUNT AND NH₃ ADSORPTION AMOUNT -

An amount of 0.5 g of each of Inventive Example Material Z-A and Comparative Example Materials Z-B and Z-C was weighed out and measured in terms of NO adsorption amount and NH₃ adsorption amount in the same manner as in the case of the previously-described Ce-containing oxide-based catalyst materials (Inventive Example Material Ce-A and Comparative Example Materials Ce-B and Ce-C).

### - RESULTS -

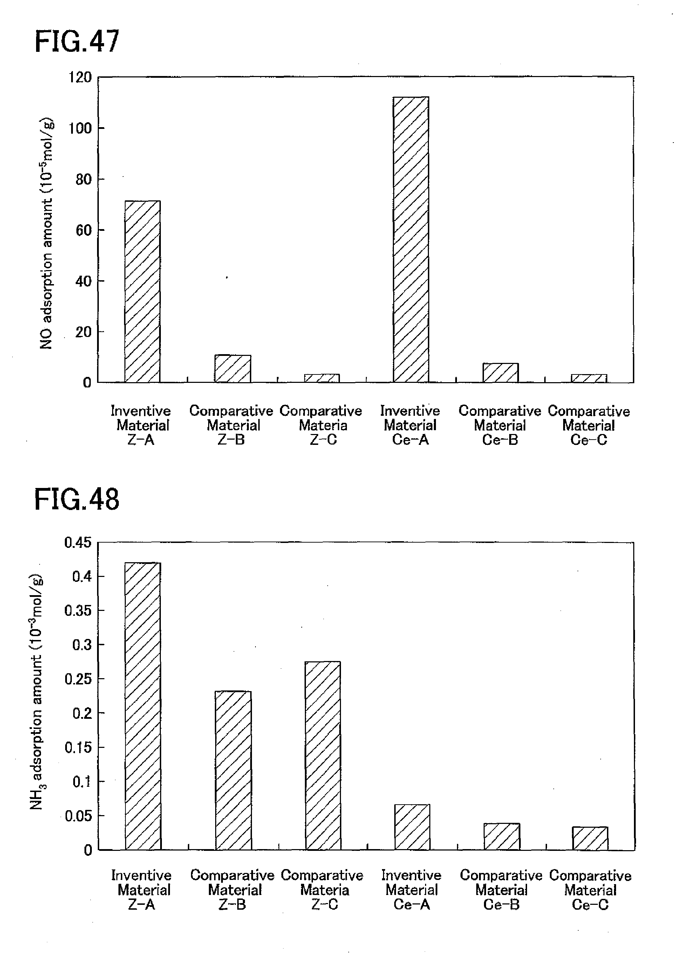

The results of the NOx adsorption amount measurement of the zeolite-based catalyst materials (Inventive Example Material Z-A and Comparative Example Materials Z-B and Z-C) and the results of the NH₃ adsorption amount measurement of them are shown in FIGS. 47 and 48, respectively, together with the results of the same kinds of measurements of the Ce-containing oxide-based catalyst materials (Inventive Example Material Ce-A and Comparative Example Materials Ce-B and Ce-C).

As for the zeolite-based catalyst materials, reference to FIG. 47 shows that Inventive Example Material Z-A using the iron oxide sol exhibited a NO adsorption amount of 70 x 10⁻⁵ mol/g or more but Comparative Example Z-B using ferric nitrate and Comparative Example Z-C using the alumina sol exhibited extremely small NO adsorption amounts. Reference to FIG. 48 shows that Inventive Example Material Z-A exhibited also a much larger HN₃ adsorption amount than Comparative Example Materials Z-B and Z-C. In addition, a distinctive feature of Inventive Example Material Z-A is that its NH₃ adsorption amount was very large. The reason for this can be believed to be that fine iron oxide particles derived from the iron oxide sol increased the solid acidity of zeolite. Furthermore, the reason for a large NO adsorption amount of Inventive Example Material Z-A can be believed to be that fine iron oxide particles derived from the iron oxide sol were involved in the adsorption of NO.

### <NOx SELECTIVE REDUCTION PERFORMANCE>

The following catalysts of Inventive Example 51 and Comparative Examples 51 and 52 were prepared and evaluated in terms of NOx selective reduction performance.

### - INVENTIVE EXAMPLE 51 -

Powdered β-zeolite, powdered Ce-Zr mixed oxide (having a CeO₂:ZrO₂ mass ratio of 90:10), powdered La-containing alumina (containing 5% by mass La₂O₃) and powdered TiO₂ as a catalytic metal compoenent were mixed, and further mixed with the iron oxide sol as a binder and ion-exchanged water, thereby preparing a slurry. The slurry was then coated on a support, dried by keeping it at 150°C for two hours and then calcined by keeping it at 500°C for two hours in the atmosphere.

Carried on the support of the catalyst were 150 g/L of β-zeolite, 40 g/L of Ce-Zr mixed oxide, 40 g/L of La-containing alumina, 20 g/L of TiO2 and 25 g/L of iron oxide sol-derived iron oxide. Note that the amount of each component carried on the support is the amount of the component per liter of the support after the calcination. Used as the support was a honeycomb support made of cordierite having a volume of 25 mL, a cell wall thickness of 3.5 mil (8.89 x 10⁻² mm) and 600 cells per square inch (645.16 mm²).

### - COMPARATIVE EXAMPLE 51 -

The catalyst of Comparative Example 51 was prepared under the same conditions as that of Inventive Example 51 except that a solution of ferric nitrate was used instead of the iron oxide sol. The amount of ferric nitrate-derived iron oxide carried on the support was 25 g/L.

### - COMPARATIVE EXAMPLE 52 -

The catalyst of Comparative Example 52 was prepared under the same conditions as that of Inventive Example 51 except that an alumina sol was used instead of the iron oxide sol. The amount of alumina sol-derived alumina carried on the support was 25 g/L.

### - EVALUATION OF NOx CONVERSION PERFORMANCE -

Each of the catalysts of Inventive Example 51 and Comparative Examples 51 and 52 was aged by keeping it at 750°C for 24 hours in a nitrogen gas containing 2% oxygen and 10% water vapor and then measured in terms of NOx conversion efficiency with a model exhaust gas flow reactor and an exhaust gas analyzer. The model exhaust gas was composed of 250 ppm NO, 250 ppm NO₂, 500 ppm NH₃, 10% O₂, and balance N₂. The NOx conversion efficiency was measured at exhaust gas temperatures of 200°C, 250°C and 300°C at the catalyst entrance.

The measurement results are shown in FIG. 49. As seen from the figure, Inventive Example 51 exhibited higher NOx conversion efficiencies than Comparative Examples 51 and 52. A feature of the graph is that the difference in NOx conversion efficiency between Inventive Example 51 and each of Comparative Examples 51 and 52 increased as the exhaust gas temperature decreased. As seen from the above, if iron oxide sol-derived fine iron oxide particles are dispersed in the catalyst layer, the NOx selective reduction performance and particularly the low-temperature activity can be increased.

## Claims

1. An exhaust gas purification catalyst in which a catalyst layer (2, 22, 32, 47, 52) is formed on a support (1, 21, 31, 45, 51), the catalyst layer containing: Ce-containing oxide particles (3, 23, 33, 413, 53) having an oxygen storage/release capacity; and a catalytic metal (5, 25,35,415,55), wherein
the catalyst layer (2, 22, 32, 47, 52) further contains a large number of iron oxide particles (4, 24, 34, 414, 54) dispersed therein, at least some of the iron oxide particles are fine iron oxide particles of 300 nm diameter or less, at least some of the fine iron oxide particles are in contact with the Ce-containing oxide particles (3, 23, 33, 413, 53), and the proportion of the area of the fine iron oxide particles to the total area of all the iron oxide particles is 30% or more when observed by electron microscopy.

2. The exhaust gas purification catalyst of claim 1, wherein the catalyst layer (22) further contains a NOx trap material (28) other than the Ce-containing oxide particles (23).

3. The exhaust gas purification catalyst of claim 1, wherein
the catalyst layer (32) contains as the Ce-containing oxide particles CeZr-based mixed oxide particles (33) which are doped with a catalytic precious metal and on the surfaces of which a catalytic precious metal is carried,
the mass proportion of the fine iron oxide particles (34) to the total amount of the fine iron oxide particles and the CeZr-based mixed oxide particles (33) is 2% to 45% by mass, both inclusive, and
the mass proportion of the catalytic precious metal carried on the surfaces of the mixed oxide particles (33) to the total amount of the catalytic precious metal doped in the mixed oxide particles and the catalytic precious metal carried on the surfaces of the mixed oxide particles is more than 2% by mass and not more than 98% by mass.

4. The exhaust gas purification catalyst of claim 1, wherein the catalyst layer (47) further contains: alumina particles (416) on which Pt is carried; and zeolite particles (412).

5. The exhaust gas purification catalyst of claim 1, wherein the catalyst layer (52) contains as the catalytic metal (55) a metal capable of selectively reducing NOx in exhaust gas by the reaction with NH₃ in an oxygen-rich atmosphere and further contains zeolite particles (56).

6. The exhaust gas purification catalyst of any one of claims 1 to 5, wherein the fine iron oxide particles (4, 24, 34, 414, 54) constitute at least part of a binder in the catalyst layer.

7. The exhaust gas purification catalyst of claim 6, wherein the catalyst layer (2, 22, 32, 47, 52) contains as the binder oxide particles of at least one kind of metal selected from transition metals and rare earth metals in addition to the fine iron oxide particles (4, 24, 34, 414, 54), and the fine iron oxide particles and the metal oxide particles are made from a sol containing an iron compound dispersed in colloid particles and a sol containing a compound of the metal dispersed in colloid particles, respectively.

8. The exhaust gas purification catalyst of claim 7, wherein at least some of the fine iron oxide particles (4, 24, 34, 414, 54) are hematite.

9. The exhaust gas purification catalyst of any one of claims 1 to 5, wherein the proportion of the fine iron oxide particles (4, 24, 34, 414, 54) in the catalyst layer (2, 22, 32, 47, 52) is 5% to 30% by mass, both inclusive.

10. The exhaust gas purification catalyst of claim 1, wherein the mass ratio of the fine iron oxide particles (4, 24, 34, 414, 54) to CeO₂ in the Ce-containing oxide particles (3, 23, 33, 413, 53) is 25/100 to 210/100 by mass, both inclusive.

11. The exhaust gas purification catalyst of claim 1, wherein the catalyst layer (2, 22, 32, 47, 52) contains as the catalytic metal (5, 25, 35, 415) at least one kind of precious metal selected from Pt, Pd and Rh, and the amount of the catalytic metal carried on the support (1, 21,31,45,51) is 1.0 g or less per liter of the support.
